(19) Europäisches Patentamt / European Patent Office / Office européen des brevets

(11) **EP 4 292 350 B1**

(12) **EUROPEAN PATENT SPECIFICATION**

(45) Date of publication and mention
of the grant of the patent:
**20.05.2026 Bulletin 2026/21**

(21) Application number: **21933767.2**

(22) Date of filing: **31.03.2021**

(51) International Patent Classification (IPC):
**H04W 68/02** $^{(2009.01)}$    **H04W 76/28** $^{(2018.01)}$

(52) Cooperative Patent Classification (CPC):
**H04W 68/02; H04W 76/28**

(86) International application number:
**PCT/CN2021/084477**

(87) International publication number:
**WO 2022/205096 (06.10.2022 Gazette 2022/40)**

(54) **A SIGNAL TRANSMITTING AND RECEIVING METHOD, DEVICE, AND STORAGE MEDIUM THEREOF**

SIGNALÜBERTRAGUNGS- UND EMPFANGSVERFAHREN, VORRICHTUNG UND SPEICHERMEDIUM DAFÜR

PROCÉDÉ DE TRANSMISSION ET DE RÉCEPTION DE SIGNAL, DISPOSITIF ET SUPPORT DE STOCKAGE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2023 Bulletin 2023/51**

(73) Proprietor: **ZTE Corporation**
**Shenzhen, Guangdong 518057 (CN)**

(72) Inventors:
• **MA, Xuan**
 **Shenzhen, Guangdong 518057 (CN)**
• **CHEN, Mengzhu**
 **Shenzhen, Guangdong 518057 (CN)**
• **XU, Jun**
 **Shenzhen, Guangdong 518057 (CN)**
• **PENG, Focai**
 **Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
**CN-A- 106 304 337    CN-A- 110 881 210**
**US-A1- 2020 322 918    US-A1- 2020 396 713**

• **VIVO: "Discussion on paging grouping", vol. RAN WG1, no. e-Meeting; 20201026 - 20201113, 24 October 2020 (2020-10-24), XP051946472, Retrieved from the Internet <URL:https://ftp.3gpp.org/tsg_ran/WG1_RL1/TSGR1_103-e/Docs/R1-2007675.zip> [retrieved on 20201024]**
• **CATT: "Details of PEI configuration", vol. RAN WG1, no. e-Meeting; 20210125 - 20210205, 19 January 2021 (2021-01-19), XP051970997, Retrieved from the Internet <URL:https://ftp.3gpp.org/tsg_ran/WG1_RL1/TSGR1_104-e/Docs/R1-2100394.zip> [retrieved on 20210119]**
• **CATT: "Paging enhancement for UE power saving", vol. RAN WG1, no. e-Meeting; 20210125 - 20210205, 19 January 2021 (2021-01-19), XP051970995, Retrieved from the Internet <URL:https://ftp.3gpp.org/tsg_ran/WG1_RL1/TSGR1_104-e/Docs/R1-2100392.zip> [retrieved on 20210119]**
• **CATT: "System overhead analysis of PEI and TRS/CSI-RS for IDLE mode UE", vol. RAN WG1, no. e-Meeting; 20210125 - 20210205, 19 January 2021 (2021-01-19), XP051970999, Retrieved from the Internet <URL:https://ftp.3gpp.org/tsg_ran/WG1_RL1/TSGR1_104-e/Docs/R1-2100396.zip> [retrieved on 20210119]**

EP 4 292 350 B1

- NOKIA ET AL: "Details on paging sub-grouping indication and determination", 3GPP DRAFT; R2-2101148 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Electronic; 20210125 - 20210205, 15 January 2021 (2021-01-15), XP051974142, [retrieved on 20210115]
- ZTE: "Discussion on power saving enhancements for paging", 3GPP DRAFT; R1-2007971, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 24 October 2020 (2020-10-24), Mobile Competence Centre ; 650, route des Lucioles ; F-06921 Sophia-Antipolis Cedex ; France , XP051946547

**Description**

This document is directed generally to wireless communications.

According to the current wireless communications, the user equipment (UE) needs to monitor a paging occasion (PO) in each discontinuous reception (DRX) cycle (i.e. paging cycle) in the RRC_IDLE or RRC _INACTIVE states. However, the UE may not have paging messages in all paging cycles. Especially for the UEs with low paging probability, a large number of unnecessary paging occasions are detected, which may cause high power consumption.

Thus, the present disclosure aims at overcoming, among others, the aforementioned deficiencies of the prior art. VIVO: "Discussion on paging grouping" (3GPP DRAFT; R1-2007675), US 2020/322918 A1, and CATT: "Details of PEI configuration" (3GPP DRAFT; R1-2100394) are related prior art.

In particular, the claimed invention relates to a wireless communication method for use in a wireless terminal, the method comprising: receiving, from a wireless network node, at least one paging indication in a discontinuous reception, DRX, cycle, and performing a paging operation based on the at least one paging indication in the DRX cycle. The invention is specified by the independent claims. Preferred embodiments are defined in the dependent claims. In the following description, although numerous features may be designated as optional, it is nevertheless acknowledged that all features comprised in the independent claims are not to be read as optional.

Various embodiments may preferably implement the following features:
Preferably, the paging indication is conveyed by a downlink-control-information or a signal.

Preferably, the paging indication is predefined as a downlink-control-information-based paging indication or a sequence-based paging indication.

Preferably, the paging indication is determined as a downlink-control-information-based paging indication or a sequence-based paging indication based on at least one of: a number of paging occasions associated with the paging indication, a number of paging occasions which are required to be monitored, a number of paging occasions in a paging frame, a capability of the wireless terminal, a type of the wireless terminal, a higher layer parameter, or a number of sub-groups of wireless terminals in a paging occasion.

Alternatively, the paging indication is determined as a downlink-control-information-based paging indication or a sequence-based paging indication based on at least one of: a number of paging occasion groups associated with the paging indication, a number of paging occasions which are not required to be monitored, a number of paging frames in the DRX cycle, a type of the DRX cycle, a value of a predefined field, an application scenario, or a number of groups of wireless terminals associated with the at least one paging indication.

Alternatively, the paging indication is determined as a downlink-control-information-based paging indication or a sequence-based paging indication based on at least one of: an interval between paging frames, a time length of the DRX cycle, a period of synchronization signal block, a number of beams, a period of the paging indication, an interval of the paging indications, or a dedicated signaling.

Preferably, a number of paging occasions associated with the at least one paging indication is predetermined.

According to the claimed invention, a number of paging occasions associated with the at least one paging indication is determined based on a higher layer parameter. Preferably it is determined based on a capability of the wireless terminal, a number of paging frames in the DRX cycle, a period of synchronization signal block, a number of sub-groups of wireless terminals in a paging occasion, a number of paging occasions in a paging frame, or a density of paging occasions in the DRX cycle.

Alternatively, a number of paging occasions associated with the at least one paging indication is determined based on at least one of: a type of the wireless terminal, an application scenario, a type of the DRX cycle, a number of beams, a number of groups of wireless terminals associated with the at least one paging indication, or a period of the at least one paging indication.

Alternatively, a number of paging occasions associated with the at least one paging indication is determined based on at least one of: an interval between paging frames, or a time length of the DRX cycle.

Preferably, at least one paging occasion associated with the at least one paging indication is determined based on at least one of: a wireless terminal identifier associated with the at least one paging indication, a wireless terminal sub-group identifier associated with the at least one paging indication, a wireless terminal group identifier of the at least one paging indication, or a number of paging occasions in a paging frame.

Alternatively, at least one paging occasion associated with the at least one paging indication is determined based on at least one of: a number of paging frames in the DRX cycle, at least one index of the at least one paging occasion, or a number of the least one paging occasion associated with the first paging indication.

Preferably, a time domain location of the at least one paging indication is determined based on at least one of: at least one system frame number of at least one paging occasion associated with the at least one paging indication, a number of paging occasions associated with single paging indication, a number of paging frames in the DRX cycle, a number of paging occasions in a paging frame, a wireless terminal identifier associated with the at least one paging indication, a number of wireless terminal sub-groups associated with the at least one paging indication, or an offset between the at least one paging indication and the first paging occasion associated with the at least one paging indication.

Alternatively, a time domain location of the at least one paging indication is determined based on at least one of: a time length of the DRX cycle, a number of wireless terminal sub-groups associated with a paging occasion, a wireless terminal sub-group identifier associated with the at least one paging occasion, a number of wireless terminal groups associated with the at least one paging indication a wireless terminal group identifier of the at least one paging indication, an interval between paging frames, or a period of synchronization signal block.

Alternatively, a time domain location of the at least one paging indication is determined based on at least one of: a type of the DRX cycle, a time length of the DRX cycle, a number of beams, or a period of the at least one paging indication.

Preferably, a time domain location of the at least one paging indication is determined based on at least one system frame number of at least one paging occasion associated with the at least one paging indication and an offset between the at least one paging indication and the first paging occasion associated with the at least one paging indication.

Preferably, the time domain location of the at least one paging indication is determined by: $SFN\_PEI = SFN\_PO - PEI\_PO\_offset$, or $SFN\_PEI = (1024 + SFN\_PO - PEI\_PO\_offset) \bmod 1024$, wherein: $SFN\_PEI$ is the time domain location of the at least one paging indication, $SFO\_PO$ is a system frame number of the first paging occasion associated with the at least one paging indication, and $PEI\_PO\_offset$ is the offset between the at least one paging indication and the first paging occasion associated with the at least one paging indication.

Preferably, a time domain location of the at least one paging indication is determined based on at least one of a number of paging occasions associated with single paging indication, a wireless terminal identifier associated with the at least one paging indication, a number of paging frames in the DRX cycle or an offset between the at least one paging indication and the first paging occasion associated with the at least one paging indication.

Preferably, the time domain location of the at least one paging indication is determined by: $(SFN\_PEI + PEI\_offset) \bmod T = X*P*(T/N)$, where, wherein: $SFN\_PEI$ is the time domain location of the at least one paging indication, $PEI\_offset$ is the offset between the at least one paging indication and the first paging occasion associated with the at least one paging indication, $T$ is a time length of the DRX cycle, $X$ is $X = floor[(UE\_ID \bmod N)/P]$, $P$ is a number of wireless terminal identifiers corresponding to the same paging indication, $N$ is a number of paging frames in the DRX cycle, $UE\_ID$ is a wireless terminal identifier associated with the at least one paging indication, and floor is a floor function.

Preferably, a time domain location of the at least one paging indication is determined based on at least one of a number of paging occasions corresponding to the at least one paging occasion, a number of paging occasions in a paging frame, a wireless terminal identifier associated with the at least one paging indication, a number of paging frames in the DRX cycle, and an offset between the at least one paging indication and the first paging occasion associated with the at least one paging indication.

Preferably, the time domain location of the at least one paging indication is determined by: $(SFN\_PEI + PEI\_offset) \bmod T = X*(P/Ns)*(T/N)$, wherein: $SFN\_PEI$ is the time domain location of the at least one paging indication, $PEI\_offset$ is the offset between the at least one paging indication and the first paging occasion associated with the at least one paging indication, $T$ is a time length of the DRX cycle, $X = floor[(UE\_ID \bmod N)/(P/Ns)]$, $P$ is a number of wireless terminal identifiers corresponding to the same paging indication, $N$ is the number of paging frames in the DRX cycle, $Ns$ is a number of paging occasions in a paging frame, $UE\_ID$ is a wireless terminal identifier associated with the at least one paging indication, and floor is a floor function.

According to the claimed invention, the at least one paging indication comprises a downlink-control-information based paging indication, wherein the downlink-control-information based paging indication comprises a bitmap indicating the paging operation.

Preferably, the indicated paging operation comprises: monitoring at least one paging occasion in the DRX cycle, or remaining in an idle state or an inactive state in the DRX cycle.

According to the claimed invention, the paging indication comprises at least one bit field, wherein each bit field is associated with a group of paging occasions. Preferably, it is associated with a paging occasion or a number of wireless terminal sub-groups corresponding to a paging occasion.

Preferably, each bit field comprises 1 bit and is associated with a paging occasion, wherein the paging status indicated by each bit field is determined based on at least one of: a number of wireless terminal groups corresponding to the paging occasion, a number of wireless terminal sub-groups corresponding to the paging occasion, a number wireless terminal sub-groups required to monitor the paging occasion, or a number wireless terminal sub-groups not required to monitor the paging occasion.

According to the claimed invention, each bit field comprises S bit where S is a non-negative value and determined based on a number of wireless terminal sub-groups corresponding to the paging occasion or the group of paging occasions.

Preferably, the at least one paging indication comprises a first sequence-based paging indication and a second sequence-based paging indication, wherein the first sequence-based paging indication indicates whether to monitor a plurality of paging occasions or a plurality of paging occasion groups, and wherein the second sequence-based paging indication indicates whether to monitor a paging occasion or a paging occasion group.

Preferably, the at least one paging indication comprises a third sequence-based paging indication, wherein the third sequence-based paging indication indicates whether to monitor a DCI-based paging indication.

Preferably, the at least one paging indication comprises a fourth sequence-based paging indication and a fifth sequence-based paging indication, wherein when at least one of the fourth sequence-based paging indication or the fifth sequence-based indication is successfully detected the method further comprises: monitoring a downlink-control-information based paging indication, and decoding the downlink-control-information based paging indication in accordance with the downlink-control-information not comprising sub-grouping information when the fourth sequence-based paging indication is successfully detected, and decoding the downlink-control-information based paging indication in accordance with the downlink control information comprising sub-grouping information when the fifth sequence-based paging indication is successfully detected.

The present invention also relates to a wireless communication method for use in a wireless network node. The method comprises: transmitting, to a wireless terminal, at least one paging indication in a discontinuous reception, DRX, cycle, wherein the at least one paging indication is associated with a paging operation of the wireless terminal in the DRX cycle.

Various embodiments may preferably implement the following features:
Preferably, the paging indication is conveyed by a downlink-control-information or a signal.

Preferably, the paging indication is predefined as a downlink-control-information-based paging indication or a sequence-based paging indication.

Preferably, the paging indication is determined as a downlink-control-information-based paging indication or a sequence-based paging indication based on at least one of: a number of paging occasions associated with the paging indication, a number of paging occasions which are required to be monitored, a number of paging occasions in a paging frame, a capability of the wireless terminal, a type of the wireless terminal, a higher layer parameter, or a number of sub-groups of wireless terminals in a paging occasion.

Alternatively, the paging indication is determined as a downlink-control-information-based paging indication or a sequence-based paging indication based on at least one of: a number of paging occasion groups associated with the paging indication, a number of paging occasions which are not required to be monitored, a number of paging frames in the DRX cycle, a type of the DRX cycle, a value of a predefined field, an application scenario, or a number of groups of wireless terminals associated with the at least one paging indication.

Alternatively, the paging indication is determined as a downlink-control-information-based paging indication or a sequence-based paging indication based on at least one of: an interval between paging frames, a time length of the DRX cycle, a period of synchronization signal block, a number of beams, a period of the paging indication, an interval of the paging indications, or a dedicated signaling.

Preferably, a number of paging occasions associated with the at least one paging indication is predetermined.

According to the claimed invention, a number of paging occasions associated with the at least one paging indication is determined based a higher layer parameter. Preferably it is based on a capability of the wireless terminal, a number of paging frames in the DRX cycle, a period of synchronization signal block, a number of sub-groups of wireless terminals in a paging occasion, a number of paging occasions in a paging frame, or a density of paging occasions in the DRX cycle.

Alternatively, a number of paging occasions associated with the at least one paging indication is determined based on at least one of: a type of the wireless terminal, an application scenario, a type of the DRX cycle, a number of beams, a number of groups of wireless terminals associated with the at least one paging indication, or a period of the at least one paging indication.

Alternatively, a number of paging occasions associated with the at least one paging indication is determined based on at least one of: an interval between paging frames, or a time length of the DRX cycle.

Preferably, at least one paging occasion associated with the at least one paging indication is determined based on at least one of: a wireless terminal identifier associated with the at least one paging indication, a wireless terminal sub-group identifier associated with the at least one paging indication, a wireless terminal group identifier of the at least one paging indication, or a number of paging occasions in a paging frame.

Alternatively, at least one paging occasion associated with the at least one paging indication is determined based on at least one of: a number of paging frames in the DRX cycle, at least one index of the at least one paging occasion, or a number of the least one paging occasion associated with the first paging indication.

Preferably, a time domain location of the at least one paging indication is determined based on at least one of: at least one system frame number of at least one paging occasion associated with the at least one paging indication, a number of paging occasions associated with single paging indication, a number of paging frames in the DRX cycle, a number of paging occasions in a paging frame, a wireless terminal identifier associated with the at least one paging indication, a number of wireless terminal sub-groups associated with the at least one paging indication, or an offset between the at least one paging indication and the first paging occasion associated with the at least one paging indication.

Alternatively, a time domain location of the at least one paging indication is determined based on at least one of: a time length of the DRX cycle, a number of wireless terminal sub-groups associated with a paging occasion, a wireless terminal sub-group identifier associated with the at least one paging occasion, a number of wireless terminal groups associated with the at least one paging indication a wireless terminal group identifier of the at least one paging indication, an interval between paging frames, or a period of synchronization signal block.

Alternatively, a time domain location of the at least one paging indication is determined based on at least one of: a type of the DRX cycle, a time length of the DRX cycle, a number of beams, or a period of the at least one paging indication.

Preferably, the time domain location of the at least one paging indication is determined based on at least one system frame number of at least one paging occasion associated with the at least one paging indication and an offset between the at least one paging indication and the first paging occasion associated with the at least one paging indication.

Preferably, the time domain location of the at least one paging indication is determined by: SFN_PEI = SFN_PO - PEI_PO_offset or SFN_PEI =(1024 + SFN_PO - PEI_PO_offset) mod 1024, wherein: SFN_PEI is the time domain location of the at least one paging indication, SFO_PO is a system frame number of the first paging occasion associated with the at least one paging indication, and PEI_PO_offset is the offset between the at least one paging indication and the first paging occasion associated with the at least one paging indication.

Preferably, the time domain location of the at least one paging indication is determined based on at least one of a number of paging occasions associated with single paging indication, a wireless terminal identifier associated with the at least one paging indication, a number of paging frames in the DRX cycle or an offset between the at least one paging indication and the first paging occasion associated with the at least one paging indication.

Preferably, the time domain location of the at least one paging indication is determined by: (SFN_PEI + PEI_offset) mod T = X*P*(T/N), where, wherein: SFN_PEI is the time domain location of the at least one paging indication, PEI_offset is the offset between the at least one paging indication and the first paging occasion associated with the at least one paging indication, T is a time length of the DRX cycle, X is X = floor[(UE_ID mod N)/P], P is a number of wireless terminal identifiers corresponding to the same paging indication, N is a number of paging frames in the DRX cycle, UE_ID is a wireless terminal identifier associated with the at least one paging indication, and floor is a floor function.

Preferably, the time domain location of the at least one paging indication is determined based on at least one of a number of paging occasions corresponding to the at least one paging occasion, a number of paging occasions in a paging frame, a wireless terminal identifier associated with the at least one paging indication, a number of paging frames in the DRX cycle, and an offset between the at least one paging indication and the first paging occasion associated with the at least one paging indication.

Preferably, the time domain location of the at least one paging indication is determined by: (SFN_PEI+PEI_offset) mod T = X*(P/Ns)*(T/N), wherein: SFN_PEI is the time domain location of the at least one paging indication, PEI_offset is the offset between the at least one paging indication and the first paging occasion associated with the at least one paging indication, T is a time length of the DRX cycle, X = floor [(UE_ID mod N)/(P/Ns)], P is a number of wireless terminal identifiers corresponding to the same paging indication, N is the number of paging frames in the DRX cycle, Ns is a number of paging occasions in a paging frame, UE_ID is a wireless terminal identifier associated with the at least one paging indication, and floor is a floor function.

Preferably, the at least one paging indication comprises a downlink-control-information based paging indication, wherein the downlink-control-information based paging indication comprises a bitmap indicating the paging operation.

Preferably, the indicated paging operation comprises: monitoring at least one paging occasion in the DRX cycle, or remaining in an idle state or an inactive state in the DRX cycle.

Preferably, the paging indication comprises at least one bit field, wherein each bit field is associated with a paging occasion, a group of paging occasions or a number of wireless terminal sub-groups corresponding to a paging occasion.

Preferably, each bit field comprises 1 bit and is associated with a paging occasion, wherein the paging status indicated by each bit field is determined based on at least one of: a number of wireless terminal groups corresponding to the paging occasion, a number of wireless terminal sub-groups corresponding to the paging occasion, a number wireless terminal sub-groups required to monitor the paging occasion, or a number wireless terminal sub-groups not required to monitor the paging occasion.

Preferably, each bit field comprises S bit where S is a non-negative value and determined based on a number of wireless terminal sub-groups corresponding to the paging occasion or the group of paging occasions.

Preferably, the at least one paging indication comprises a first sequence-based paging indication and a second sequence-based paging indication, wherein the first sequence-based paging indication indicates whether to monitor a plurality of paging occasions or a plurality of paging occasion groups, and wherein the second sequence-based paging indication indicates whether to monitor a paging occasion or a paging occasion group.

Preferably, the at least one paging indication comprises a third sequence-based paging indication, wherein the third sequence-based paging indication indicates whether to monitor a DCI-based paging indication.

Preferably, the at least one paging indication comprises at least one of a fourth sequence-based paging indication and a fifth sequence-based paging indication, wherein the method further comprises:
transmitting a downlink-control-information based paging indication, wherein the downlink-control-information based paging indication is encoded in accordance with the downlink-control-information not comprising sub-grouping information when the fourth sequence-based paging indication is transmitted, and wherein the downlink-control-information based paging indication is encoded in accordance with the downlink control information comprising sub-grouping information when the fifth sequence-based paging indication is transmitted

The present disclosure also relates to a wireless terminal, comprising:

a communication unit, configured to receive, from a wireless network node, at least one paging indication in a discontinuous reception, DRX, cycle, and

a processor configured to perform a paging operation based on the at least one paging indication in the DRX cycle.

Various embodiments may preferably implement the following feature:
Preferably, the processor is further configured to perform any of aforementioned wireless communication methods.

The present disclosure also relates to a wireless network node, comprising a communication unit, configured to transmit, to a wireless terminal, at least one paging indication in a discontinuous reception, DRX, cycle, wherein the at least one indication is associated with a paging operation of the wireless terminal in the DRX cycle.

Various embodiments may preferably implement the following feature:
Preferably, the wireless network node further comprises the processor configured to perform any of aforementioned wireless communication methods.

The present disclosure relates to a computer program product comprising a computer-readable program medium code stored thereupon, the code, when executed by a processor, causing the processor to implement a wireless communication method recited in any one of foregoing methods.

In accordance with the present disclosure, a signal/channel with indication information may be introduced before the PO to indicate whether a UE needs to receive paging messages. This may reduce the power consumption caused by paging reception. However, different designs and configurations of this indication information may bring different power saving effects. If incorrectly configured, more power may even be consumed. Therefore, the present disclosure sets fourth various preferred implementations of the signal/channel.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

FIG. 1 shows each PF containing one PO according to an embodiment of the present disclosure.

FIG. 2 shows each PF containing two POs according to an embodiment of the present disclosure.

FIG. 3 shows the number of POs associated with the same PEI is equal to Ns according to an embodiment of the present disclosure.

FIG. 4 shows the UEs in n PFs corresponding to adjacent n UE_ID detect the same PEI according to an embodiment of the present disclosure.

FIG. 5 shows the UEs in n PFs corresponding to adjacent P POs in time domain detect the same PEI according to an embodiment of the present disclosure.

FIG. 6 shows a PEI, wherein a first bit field contains 1 bit and a second bit field contains 8 bits according to an embodiment of the present disclosure.

FIG. 7 shows a PEI, wherein all the three bit fields contain 4 bits according to an embodiment of the present disclosure.

FIG. 8 shows an example of a schematic diagram of a wireless terminal according to an embodiment of the present disclosure.

FIG. 9 shows an example of a schematic diagram of a wireless network node according to an embodiment of the present disclosure.

FIG. 10 shows a flowchart of a method according to an embodiment of the present disclosure.

FIG. 11 shows a flowchart of a method according to an embodiment of the present disclosure.

The UE monitors one paging occasion (PO) per discontinuous reception (DRX) cycle (i.e. paging cycle). One Paging Frame (PF) is one Radio Frame and may contain one or multiple PO(s) or starting point of a PO.

The PF and PO for paging are determined by the following formulae:

System Frame Number (SFN) for the PF is determined by:

$$(\text{SFN} + \text{PF\_offset}) \bmod T = (T \operatorname{div} N)*(\text{UE\_ID} \bmod N);$$

index (i_s), indicating the index of the PO is determined by:

$$\text{i\_s} = \text{floor} (\text{UE\_ID}/N) \bmod Ns,$$

where, T denotes the DRX cycle of the UE; N denotes the number of total paging frames in T; Ns denotes the number of paging occasions for a PF; PF_offset denotes the offset used for PF determination; UE_ID denotes an identifier (ID) of the UE (e.g., the 5th Generation System Temporary Mobile Subscription Identifier (5G-S-TMSI)) mod 1024.

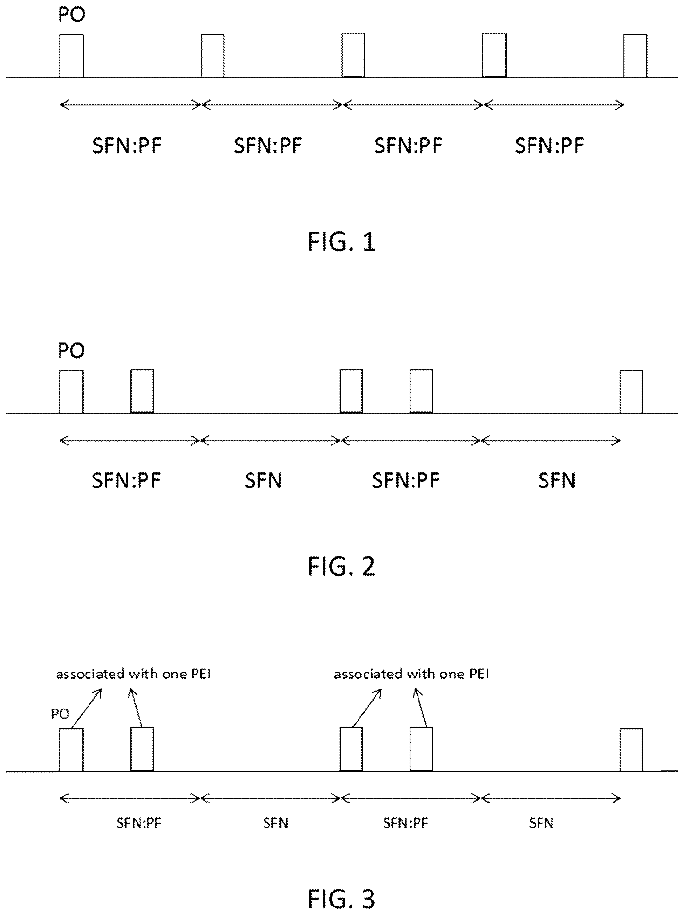

The value of N*Ns determines the number of POs in a DRX cycle, i.e. the density of POs in a DRX cycle. For example, assuming the DRX cycle (T) is 128 radio frames, if the parameter N is one T (N=T) and Ns is four, the number of POs in a DRX cycle is 512. If the parameter N is one-sixteenth of T (N=1/16T) and Ns is 1, the number of POs in a DRX cycle is 8. For example, when N is configured as one T, and Ns is configured as one, the number of PF is equal to the radio frames in one DRX cycle, and each PF contains one PO (as shown in FIG. 1). When N is configured as half of T, and Ns is configured as two, the number of PF is equal to the half of radio frames in one DRX cycle, and each PF contains two POs (as shown in FIG. 2).

When *SearchSpaceId* = 0 is configured for *pagingSearchSpace,* Ns is either 1 or 2. For Ns = 1, there is only one PO which starts from the first physical downlink control channel (PDCCH) monitoring occasion for paging in the PF. For Ns = 2, PO is either in the first half frame (i_s = 0) or the second half frame (i_s = 1) of the PF.

When *SearchSpaceId* other than 0 is configured for *pagingSearchSpace,* the UE monitors the (i_s + 1)$^{th}$ PO.

To reduce the power consumption caused by the UE receiving unnecessary POs, an indication such as a paging early indication (PEI) can be introduced before the POs. The PEI can inform the UE whether to wake up to receive (e.g. monitor) POs in advance or not.

It will be appreciated that PEI/paging indication (PI) denotes a signal/channel with the paging indication information in this disclosure. In some embodiments, a PEI can be a PEI burst. In this case, multiple PEI signals/channels with the same content and different beams are transmitted in the PEI burst. When a PEI is associated with multiple POs, multiple POs may be associated with all PEIs of a PEI burst, or they may be associated with a PEI with a specific quasi-colocation information of a PEI burst.

In addition, the type of PEI is considered. In an embodiment, PEI is a DCI-based PEI, e.g. a legacy DCI format, e.g. reserved bits; or redefined bit meanings. In some embodiments, the legacy DCI format includes at least one of DCI format 1-0, or DCI format 2-6. In an embodiment, PEI is a DCI-based PEI, e.g. a new DCI format. In some embodiments, the new DCI format is differentiated by a radio network Temporary Identifier.

In an embodiment, the PEI is a sequence-based PEI, e.g. SSS-like PEI. It will be appreciated that the PEI is a sequence and the PEI sequence is obtained based on the secondary synchronization signal (SSS). That is, some factors of the SSS generation formula are changed to obtain PEI sequences. In some embodiments, like the SSS, the PEI signals use the Gold sequence. The PEI can be generated by:

$$d_{PEI}(n) = \left\{1 - 2x_0\left[(n+m_0)\bmod l_{PEI}\right]\right\}\left\{1 - 2x_1\left[(n+m_1)\bmod l_{PEI}\right]\right\}\cdot f \, ,$$

where $l_{PEI}$ is the length of the PEI generation sequence, $f$ is a factor that affects PEI sequence generation. Other parameters, such as $x_0$, $x_1$, $m_0$ and $m_1$, may be the same or different from those of existing SSS. In addition, some information, such as UE grouping or group indication, can be carried on one or more of these parameters (e.g., $l_{PEI}$, $x_0$, $x_1$,

$m_0$ and $m_1$).

In some embodiments, the length of PEI is 127 subcarriers. The PEI signal has the same time-frequency structure as SSS. An OFDM symbol is occupied in the time domain, and the frequency domain is a continuous 127 subcarriers.

In some embodiments, the length of PEI is larger than that of the SSS. But the PEI signal has the same time-frequency structure as the SSS. In some embodiments, the resource of the PEI is $n$ times of the SSS. For example, the PEI signals occupy $n$ OFDM symbols in the time domain, and the frequency domain corresponding to each symbol occupies 127 consecutive subcarriers.

In some embodiments, CSI-RS like PEI is considered. It will be appreciated in this case that the PEI is a sequence and the PEI sequence is obtained based on the CSI-RS sequence. That is, some factors of the CSI-RS sequence generation formula are changed to obtain PEI sequences. In some embodiments, PEI can be generated by:

$$d_{PEI}(m) = \left( \frac{1}{\sqrt{2}}(1 - 2 \cdot c(2m)) + j\frac{1}{\sqrt{2}}(1 - 2 \cdot c(2m+1)) \right) \cdot f \ ,$$

where $f$ is a factor that affects PEI sequence generation. The $c(m)$ is a pseudo-random sequence, and the pseudo-random sequence generator can be the same as or different from CSI-RS.

In some embodiments, the time-frequency structure of the PEI is the same as CSI-RS. Density(the number of REs per resource block (RB)) of 0.5, 1 and 3 can be used for PEI resource mapping. Different ports correspond to different mapping density.

In some embodiment, one PEI may be conveyed by the DCI or a signal (e.g. a kind of signal, a type of signal), i.e. DCI-based PEI or sequence-based PEI. For example, the signal may comprise reference signal.

In some embodiments, both the DCI-based PEI and the sequence-based PEI can be used.

In some embodiments, only one of DCI-based PEI and sequence-based PEI is transmitted for a PO or an associated group of POs. In some embodiments, for a PO or an associated group of POs, both the DCI-based PEI and the sequence-based PEI are transmitted.

In some embodiments, the type of PEI detected by the UE is determined by at least one of the following.

1. Predefined:
In some embodiments, the PEI is a predefined as the DCI-based PEI and the UEs monitor the PDCCH to detect the DCI-based PEI at the PEI location. In some embodiments, the PEI is predefined as a sequence-based PEI and the UEs detect the PEI in accordance with the sequence detection method. In some embodiments, both the DCI-based PEI and the sequence-based PEI are predefined, the UEs monitor the PDCCH to detect DCI_based PEI and receive the sequence-based PEI at the PEI location.

2. The number of POs or PO groups associated with one PEI.
In some embodiments, the type of PEI detected by the UE is determined by the PO numbers associated with one PEI (burst). Because the DCI-based PEI can carry more information, it is more suitable when one PEI is associated with multiple POs/PO groups. Therefore, a feasible solution is that when the number of POs/PO groups is less than the threshold F, the UE detects the sequence-based PEI. When the number of POs/PO groups associated with a PEI is greater than threshold F, the UE detects the DCI-based PEI. When the number of POs/PO groups is equal to the threshold F, the UE detects the DCI-based PEI or sequence-based PE. In this embodiment, F is a non-negative value.

3. The PO numbers that the corresponding UEs need to be woken up to receive PO.

4. The PO numbers that the corresponding UEs does not need to be woken up to receive PO (that is the PO numbers indicated to go-to-sleep).

5. Ns: The PO numbers in one PF.
In some embodiments, the type of PEI detected by the UE is determined by the PO numbers in one PF. For example, the PEI (burst) is transmitted every N PF, where $N \geq 1$. When the PO numbers in one PF is smaller than a threshold, the UE detects the sequence-based PEI. When the PO numbers in one PF is larger than a threshold, the UE detects the DCI-based PEI.

6. N: The number of total paging frames in DRX cycle.

7. Interval between PFs.

The interval between PFs is determined by the length of a DRX cycle and the number of total paging frames in a DRX cycle.

8. DRX type or DRX cycle, e.g. DRX or extended DRX.

When other paging parameters are not changed, the longer the DRX cycle, the sparser the PF. In some embodiments, the type of PEI detected by the UE is determined by the DRX cycle. For example, when the UE is configured a common DRX cycle, then the DCI-based PEI is detected. When the UE is configured with an extended DRX cycle, the UE detects the sequence-based PEI. Or when the extended DRX cycle is configured, the UE detects both DCI-based PEI and sequence-based PEI.

9. UE capability or UE type. In some embodiments, the type of PEI detected by the UE is determined by the UE capability or UE type. In some embodiments, the type of PEI detected by the UE is determined by the UE capability. In some embodiments, the UE capability includes at least one of the following: the number of receiving antennas, the number of transmitting antennas, whether coverage enhancement is supported, and the maximum supported (downlink or uplink) bandwidth. In some embodiments, the type of PEI detected by the UE is determined by the UE capability or UE type. In some embodiments, the RedCap (Reduced Capability) UE detects the sequence-based PEI, the other common UEs detect the DCI-based PEI.

10. High layer parameters, e.g. radio resource control (RRC) parameter or media access control (MAC) control element (CE).

In some embodiments, the type of PEI detected by the UE is determined by the high layer parameters. In some embodiments, the high layer parameters include RRC parameter and MAC CE. In some embodiments, the high layer parameters indicate that the DCI-based PEI is used, then the UEs monitor the PDCCH to detect DCI-based PEI at the PEI location. In some embodiments, the high layer parameters indicate that the sequence-based PEI is used, then the UEs detect the PEI in accordance with the sequence detection method. In some embodiments, the high layer parameters indicate that both the DCI-based PEI and the sequence-based PEI are used, then the UEs monitor the PDCCH and detect the sequence-based PEI at the PEI location.

11. A predefined (or configurable) value.

In some embodiments, the type of PEI detected by the UE is determined by a predefined (or configurable) value. In some embodiments, the predefined value can be configured with different values to distinguish different indication purposes. For example, the predefined value is presented by one bit. If the predefined value is not configured (or NULL), then the UEs monitor the PDCCH and detect the sequence-based PEI at the PEI location. When the predefined value is configured as bit '0', the UEs detect the PEI in accordance with the sequence detection method (i.e. sequence-based PEI). When the predefined value is configured as bit '1', the UEs monitor the PDCCH to detect DCI-based PEI at the PEI location.

12. Any one of: application scenario, SSB period, the number of beams, the number of sub-groups in one PO, the number of groups, PEI period, or interval between PEIs.

13. The indication of the specific signaling. In some embodiments, there is a signaling that indicates the PEI type the UE detects. For example, when the UE successfully receives the signaling, the UE detects a DCI-based PEI in the PEI location. When the UE fails to receive the signaling, the UE does not wake up to detect the PEI.

14. In some embodiments, the paging indication is determined as a DCI-based paging indication or a sequence-based paging indication based on the PO numbers in one PF (Ns) and the total PFs in one DRX cycle (N). For example, when the product of Ns and N is larger than the threshold F, the UE detects a DCI-based PEI. When the product of Ns and N is smaller than the threshold F, the UE detects a sequence-based PEI is detected.

15. In some embodiments, the paging indication is determined as a DCI-based paging indication or a sequence-based paging indication based on the number of POs or PO groups associated with one PEI (P1) and the PO numbers in one PF (Ns). For example, when the product of Ns and P1 is larger than the threshold F, the UE detects the DCI-based PEI. When the product of Ns and P1 is smaller than the threshold F, the UE detects the sequence-based PEI.

16. In some embodiments, the paging indication is determined as a DCI-based paging indication or a sequence-based paging indication based on the interval between PFs and the SSB period. For example, when the value of the SSB period divided by the interval between PFs is larger than a threshold, UE detects a DCI-based PEI. When the value of the SSB period divided by the interval between PFs is smaller than a threshold, UE detects a sequence-based PEI.

In some embodiments, the method of a base station (BS) (e.g. a next-generation nodeB (gNB) or a radio access network (RAN) node) determining the type of PEI may be similar to that of the UE. For example, for the BS, the type of PEI is determined by at least one of the following: predefined; the PO numbers associated with one PEI; the PO numbers that need to be woken up to receive PO; the PO numbers does not need to be woken up to receive PO (that is the PO numbers indicated to go-to-sleep); UE capability or UE type; High layer parameters, e.g. RRC parameter or MAC CE, a predefined (and configurable) value; application scenario; Ns: the PO numbers in one PF; N: the number of total paging frames in DRX cycle; interval between PFs; DRX type or DRX cycle, e.g. DRX or extended DRX; SSB period; the number of beams; the number of sub-groups in one PO; the number of groups; PEI period; or interval between PEIs.

In some embodiments, for the BS, the type of PEI is determined by the UE capability or UE type. In some embodiments, the type of PEI is determined by the UE capability. In some embodiments, the UE capability includes at least one of the following: number of receiving antennas, number of transmitting antennas, whether coverage enhancement is supported, and maximum supported (downlink or uplink) bandwidth. In some embodiments, the type of PEI is determined by the UE capability or UE type. In some embodiments, the sequence-based PEI is used for RedCap (Reduced Capability) UE, the DCI-based PEI is used for other common UEs.

In some embodiments, for the BS, the type of PEI is determined by high layer parameters. In some embodiments, the high layer parameters include RRC parameter or MAC CE. In some embodiments, the high layer parameters indicate which PEI type among the DCI-based PEI, the sequence-based PEI and both DCI-based PEI and sequence-based PEI is used in current situation. When the PEI type is indicated, the PEI type does not change until higher-layer parameters are changed.

In some embodiments, for the BS, the type of PEI is determined by a predefined (and configurable) value. In some embodiments, the predefined value can be configured with different values to distinguish different indication purposes. For example, the predefined value is presented by one bit. If the predefined value is not configured (or NULL), then the PEI type is a combined DCI-based PEI and sequence-based PEI by default. When the predefined value is configured to bit '0', then the sequence-based PEI is adopted. When the predefined value is configured to bit '1', then the DCI-based PEI is adopted.

Next, mapping of PEI and PO(s) is considered. The relationship between the number of POs and the number of associated PEIs can be any one of the following.

1. One PEI indicates one PO, e.g. a one-to-one correspondence between PEI and PO; or one PO is indicated by multiple PEI. For example, the PEI is associated with UE_ID, and the UEs with different UE_ID correspond to the same PO.

2. One PEI indicates multiple POs, e.g. the multiple POs can be the POs in the same one DRX cycle (paging cycle); or the multiple POs can be the POs in different DRX cycles (paging cycles).

3. The number of POs associated with one PEI (burst) can be determined by at least one of the following: Higher layer parameter, RRC parameter, or MAC CE.

In some embodiments, the number of POs associated with one PEI(burst) is indicated by the high layer parameter. For example, there is one parameter *NumofPO* that is configured in PEI IE. The parameter can be configured to multiple values, such as 1, 2, 4. If this parameter is set to 4, it indicates that one PEI is associated with four POs.

4. UE capability or UE type. In some embodiments, the number of POs associated with one PEI is determined by the UE capability. The number of POs associated with the PEI varies with the UE capability level. For example, the higher the UE capability level, the more POs associated with the PEI. In some embodiments, the number of POs is associated with the UE type. For example, for reduced capability (Redcap) UE, one PEI corresponds to one PO, and for normal UE, one PEI corresponds to multiple POs.

5. In some embodiments, the number of POs associated with one PEI (burst) is predefined, e.g. it can be a fixed value.

6. In some embodiments, the number of POs and the number of associate PEIs can be determine based on any one of: application scenario; the value of N: the number of total paging frames in DRX cycle; interval between PFs; DRX type or DRX cycle, e.g. DRX or extended DRX; SSB period; or the number of beam.

7. The number of sub-groups in one PO.

According to the claimed invention, the total number of sub-groups associated with one PEI equals the product of the number of POs associated with PEI and the number of sub-groups contained in each PO. When the number of sub-groups that PEI can indicate is not changed, the larger the number of sub-groups contained in one PO, the smaller the number of POs associated with one PEI. Conversely, the smaller the number of sub-groups contained in one PO, the larger the number of POs associated with PEI.

8. The number of PO groups; or PEI period.

9. Ns: the number of paging occasions for a PF.

In some embodiments, Ns is an integer multiple of the number of POs associated with same PEI. For example, in some embodiments, the number of POs associated with the same PEI is equal to Ns.

In some embodiments, the number of POs associated with the same PEI is an integer multiple of Ns.

10. The density of POs in a DRX cycle. The density of POs in a DRX cycle is determined by the number of total paging frames in the DRX cycle and the number of paging occasions for a PF, e.g. the value of N and Ns. In some embodiments, the number of POs associated with a PEI is determined based on the number of total paging frames in DRX cycle and the number of paging occasions for a PF.

In some embodiments, the number of POs associated with a PEI is determined based on the interval between PFs, the SSB period and the number of paging occasions for a PF. For example, the number of paging occasions associated with a PEI is equal to the product of the number of PFs in one SSB period and the number of paging occasions for a PF.

The UEs/POs associated with the same PEI can be determined by at least one of the following: UE_ID; sub-group ID; group ID; N: the number of total paging frames in DRX cycle; Ns: the number of paging occasions for a PF; i_s: the index of the PO; or P: the number of POs associated with same PEI.

With reference to FIG. 3, in some embodiments, the PEI indicates the UEs whose PO is located in n PFs. In some embodiments, the PEI indicates the UEs whose PO is located in adjacent n PFs within the SSB period, e.g. n = 1: the PEI indicates the UEs whose PO are within one PF. The PEI indicates the UEs with the same value of (UE_ID mod N). the number of POs associated with same PEI is equal to Ns.

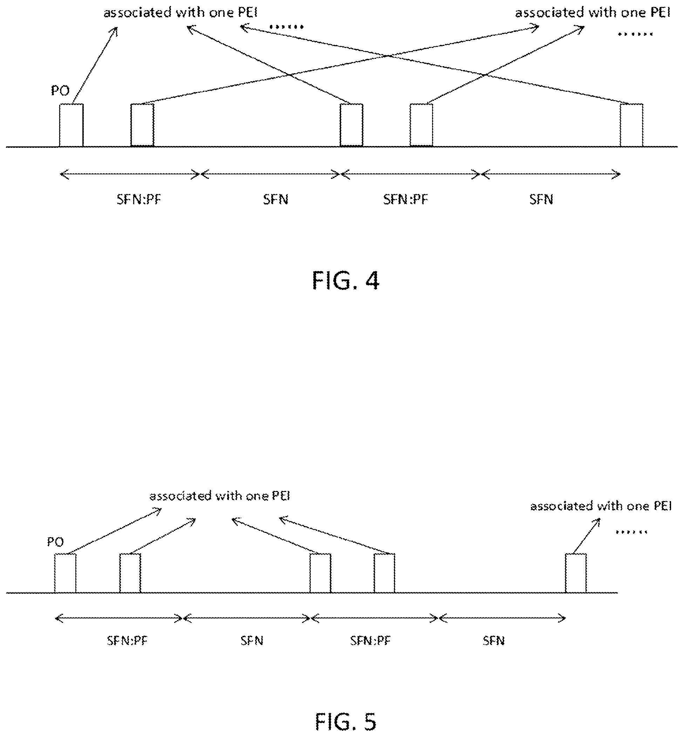

With regard to FIGS. 4 and 5, in some embodiments, the number of POs associated with the same PEI is smaller than Ns, e.g. n > 1: the PEI indicates the UEs whose PO are in n PFs, wherein n PFs are adjacent in the time domain. It will be appreciated that the SFN of the adjacent PFs may not be adjacent, but rather depends on the configuration of the number of total paging frames in DRX cycle.

The UEs in n PFs corresponding to adjacent n UE IDs detect the same PEI. For example, the UEs with the UE ID equal to [0 to (P-1)] are indicated by one PEI, and UEs with UE ID equal to [P to (2P-1)] are indicated by another one PEI (see FIG. 4).

The UEs in n PFs corresponding to adjacent P POs in time domain detect the same PEI. Assuming n = 2, P=4, the respective scheme is shown in FIG. 5.

Alternatively, n PFs are in the n DRX cycles.

Next, the location of the PEI is considered.

In some embodiments, the time domain of the PEI is determined by at least one of the following: the SFN of PO; P: the number of POs associated with one PEI; T: DRX cycle of the UE; N: the number of total paging frames in DRX cycle; Ns: the number of paging occasions for a PF; UE_ID; the number of sub-groups, e.g. the number of sub-groups in one PO or the number of sub-groups corresponds to the PEI; the sub-group ID; the number of groups; the group ID; the interval between PFs; DRX type or DRX cycle, e.g. DRX or extended DRX; SSB period; the number of beam; PEI period; or PEI_PO_offset: the offset between the PEI and the first PO the PEI associated.

In some embodiments, the SFN of the PEI is determined by the SFN of PO and the offset between PEI and PO. The interval between the SFN of PEI and that of PO is PEI_PO_offset, and PEI is located before the PO. For example, SFN_PEI = SFN_PO - PEI_PO_offset or SFN_PEI =(1024 + SFN_PO - PEI_PO_offset) mod 1024, where the PEI_PO_offset$\geq$0, for example, PEI_PO_offset=1.

In some embodiments, the UEs corresponding to adjacent P UE_ID monitors the same PEI, where P$\geq$1. The SFN of the PEI is determined by at least one of the number of POs associated with same PEI, the UE_ID, the number of PFs in one DRX cycle and the PEI_offset. The distance between two PEIs is equal to the distance between P PFs, that is, P*(T/N). Consecutive P UE_IDs correspond to the same X value, so they can correspond to the same PEI, e.g. (SFN_PEI + PEI_offset) mod T = X*P*(T/N), where X = floor[(UE_ID mod N)/P].

In some embodiments, the adjacent P POs in time domain are indicated by one PEI or one PEI burst. The adjacent P POs may be on the same PF or different PFs. The SFN of the PEI is determined by at least one of the number of POs associated with same PEI, the number of POs in one PF, the UE_ID, the number of PFs in one DRX cycle and the PEI_offset. The distance between two PEIs is equal to the distance between P PFs, that is, (P/Ns)*(T/N). For example, (SFN_PEI+PEI_offset) mod T = X*(P/Ns)*(T/N), where X = floor [(UE_ID mod N)/(P/Ns)].

The slot number that PEI is located is determined by at least one of the following: predetermined or high layer parameters. For example, for predetermined, the beginning of the PEI location is the last slot of the radio frame. For the PEI with multiple beams, the PEI may span two radio frames. In some embodiments, the UEs are not expected to detect the PEI out of the radio frame. In some embodiments, the UEs detect the PEI span two radio frames; High layer parameters.

In some embodiments, the UE detects the PEI in a PEI window. In some examples, the PEI window is determined by two offsets. In another example, the PEI window is determined by an offset and a duration.

Next, DCI-based PEI is considered.

The DCI-based PEI may work as a wake-up signal (WUS).

In some embodiments, the PEI may always be transmitted by BS.

In some embodiments, the PEI may be transmitted when there are UEs corresponding to one or more POs that need to be indicated to process a PO.

In some embodiments, the UE monitors the PDCCH to detect the PEI at the PEI location. In some embodiments, the UE wakes up to receive PO when the PEI is not detected (corresponds to the always transmitted PEI).

In some embodiments, the UE does not receive the PO (does not wake up /keeps sleep state) when the PEI is not detected (corresponds to the not always transmitted PEI).

In an embodiment, the DCI-based PEI is worked as a go-to-sleep (GTS) signal.

In some embodiments, the PEI is always transmitted by the BS.

In some embodiments, the PEI is transmitted when there are UEs corresponding to one or more POs that does not need to process PO (keep sleep state).

In some embodiments, the PEI is transmitted when the UEs corresponding to all the POs associated with the PEI does not need to process a PO (keep sleep state).

In some embodiments, the UE monitors the PDCCH to detect the PEI at the PEI location; the UE wakes up to receive PO when the PEI is not detected (corresponds to the not always transmitted PEI).

In some embodiments, the PEI includes at least one bit fields for at least one of: wake up/go-to-sleep indication; indication of whether to monitor paging PDCCH, sub-group indication, system information (SI) change information, Earthquake and Tsunami Warning System (ETWS) information, TRS/CSI-RS (tracking reference signal/channel state information reference signal) indication, or indication of whether to receive a broadcast/multi-cast message or not.

In some embodiments, there is a common bit field in PEI to indicate whether the UE should monitor the paging PDCCH no matter whether the UE needs to be woken up to receive the paging message.

In some embodiments, each bit field corresponding to one PO or one PO group has a bit to indicate whether the UE should monitor the paging PDCCH no matter whether the UE needs to be woken up to receive the paging messages.

In some embodiments, one bit field contains two functional modules. The bit in the first functional module (such as one bit) indicates the meaning of the bits in the second functional module. The value 'T' indicates that the bits in the second functional module is used to indicate whether the UE should wake up. The value 'F' indicates that the bits in the second functional module is used to indicate other function, such as SI change, ETWS. The value T is equal to 1 and value F is equal to 0; or the value T is equal to 0 and value F is equal to 1.

In some embodiments, when the 'F' is detected, the UEs do not wake up.

The bit in the second functional module indicate to the UE whether to wake up to monitor PO. Alternatively, the bit in the second functional module indicates the other function, such as SI change.

In some embodiments, the bits used to indicate the UE to wake-up/go-to-sleep in PEI are in the form of bitmap.

The bit value of DCI indicates the different meaning. Such as, A 'A' value indicates the UE to wake up to monitor PO; a 'B' value indicates the UE not to wake up to monitor PO, just go to sleep. Alternatively, A equals 0, B equals 1, or A equals 1, B equals 0.

The PEI may contain P bit fields, wherein the P≥1. Each bit field corresponds to one PO or one PO group. In some embodiments, the PEI is associated with one PO, then the PEI contains one bit field to indicate whether to monitor a PO. In some embodiments, the PEI is associated with four POs, then the PEI contains 4 bit fields to indicate whether to monitor a PO.

In some embodiments, one bit field contains one bit. Bit 'A' indicates the UE to wake up to monitor a PO; bit 'B' indicates the UE not to wake up to monitor a PO (go to sleep). Wherein A equals 1, and B equals 0; or A equals 0, and B equals 1.

In some embodiments, the value of the bit field A or B are determined by at least one of the following: the number of sub-groups corresponds to the PO; the number of sub-groups where the UEs need to be woken up corresponding to the PO; the number of sub-groups where the UEs needs to go to sleep (does not need to wake up) corresponding to the PO.

In some embodiments, when UEs in all sub-groups corresponding to the PO need to monitor the PO, the value of the bit field is A. Otherwise the value of the bit field is B.

In some embodiments, when UEs in any one sub-groups corresponding to the PO need to monitor the PO, the value of the bit field is A. Otherwise the value of the bit field is B.

In some embodiments, when the number of sub-groups where the UEs needs to be woken up corresponding to the PO is larger than the number of sub-groups where the UEs needs to go to sleep (does not need to wake up) corresponding to the PO, the value of the bit field is A. Otherwise the value of the bit field is B.

In some embodiments, one PO corresponds to one group, that is there is no sub-group information for this PO carried on PEI. When the UEs needs to wake up to monitor the PO, the value of the bit field should be A. When the UEs does not need to monitor the PO, the value of the bit field should be B.

In some embodiments, one PO corresponds to multiple sub-groups. The value of the bit field is determined by the number of sub-groups where the UEs needs to be woken up corresponding to the PO.

In some embodiments, one bit field contains S bits, wherein the S≥1. S is determined by the number of sub-groups corresponding to one PO or one PO group.

The number of bits in each bit field can be the same or different.

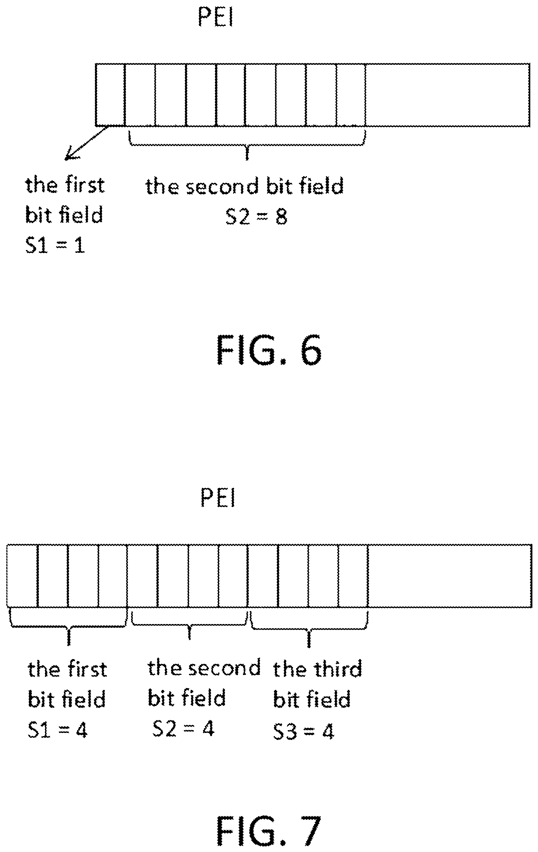

In some embodiments, P=2, that is one PEI is associated with two POs. When the first PO corresponds to 1 sub-group (that is there is no sub-grouping information for this PO carried on PEI), the second PO corresponds to 8 sub-groups, then the first bit field contains 1 bit and the second bit field contains 8 bits (see FIG. 6).

In some embodiments, P=3, that is one PEI is associated with two POs. When all the three POs corresponds to 4 sub-groups, all the three bit fields contain 4 bits (see FIG. 7).

Next, sequence-based PEI is considered.

In some embodiments, the UE receives PEI sequence A and PEI sequence B in the PEI resource. The sequence A may be a common PEI sequence, and sequence B may be a specific PEI sequence. The common PEI may correspond to multiple PO or multiple PO groups. The specific PEI may correspond to one PO or one PO group.

In some embodiments, the sequence may work as a wake-up signal, e.g. if the UE successfully detects either one of sequences A and B, the UE wakes up to receive the PO; if the UE successfully detects both the sequences A and sequence B, the UE wakes up to receive the PO; or if neither sequence A nor sequence B is detected by the UE, the UE does not receive the PO, UE goes to/stays in sleep state.

In some embodiments, the sequence may work as a go-to-sleep signal, e.g. if the UE successfully detects either one of sequences A and B, the UE does not wake up to receive the PO, UE goes to/stays in sleep state; if the UE successfully detects both the sequences A and sequence B, the UE does not wake up to receive the PO, UE goes to/stays in sleep state; or if neither sequence A nor sequence B is detected by the UE, the UE wakes up to receive the PO.

The UE may receive a first sequence in the PEI resource, e.g. if the UE successfully detects the first sequence, the UE monitors a DCI-based PEI, and whether the UE wakes up to receive PO is in accordance with the DCI-based PEI; or if the UE fails to detect the first sequence, the UE will not wake up and neither receive DCI-based PEI nor paging PDCCH.

The UE may receive a second sequence and a third sequence in the PEI resource, e.g. if the UE successfully detects the second sequence, then the UE monitors a DCI-based PEI, and the UE decodes the PEI in accordance with the DCI not containing sub-grouping information; if the UE successfully detects the third sequence, then the UE monitors a DCI-based PEI, and the UE decodes the PEI in accordance with the DCI containing sub-grouping information; or if neither the second sequence nor the third is detected by the UE, the UE does not monitor the DCI-based PEI and does not wake up to receive the PO.

The other considerations are discussed in the following.

In some embodiments, the PEI is transmitted with multiple beams or quasi-colocation information.

In some embodiments, the PEI is transmitted with multiple beams with the same beam directions to those of SSB. In some embodiments, for each beam direction, the PEI is transmitted with the identical beam direction of SSB. In some embodiments, for each beam direction, the PEI is transmitted with the identical content. In some embodiments, for each beam direction, the PEI is transmitted with different scrambling code. In some embodiments, the scrambling code is associated with SSB. In some embodiments, the scrambling code is associated with SSB index.

In some embodiments, the quasi-colocation information of the PEI is associated with a SSB. In some embodiments, the PEI antenna port is quasi co-located with a reference signal, for example a CSI-RS indicated by a base station.

In some embodiments, the PEI is a PEI burst which consist of S PEIs, wherein $S \geq 1$. In some embodiments, S is determined by higher layer parameter.

In some embodiments, S is equal to the number of SSBs. In some embodiments, S is equal to the number of actual transmitted SSBs. The $k^{th}$ PEI corresponds to the $k^{th}$ transmitted SSB, where k=1, 2, ..., S. In some embodiments, the UE assumes that the $k^{th}$ PEI antenna port is quasi co-located (QCL) with the $k^{th}$ transmitted SSB. In some embodiments, S is equal to the number of paging occasions. The $k^{th}$ PEI corresponds to the $k^{th}$ paging occasions, where k=1, 2, ..., S. In some embodiments, the UE assumes that the $k^{th}$ PEI antenna port is quasi co-located with the $k^{th}$ paging occasions, where k=1, 2, ..., S. In some embodiments, the UE assumes that the $k^{th}$ PEI antenna port is quasi co-located (QCL) with the kth PDCCH monitoring occasion in a paging occasion, where k=1, 2,..., S.

In some embodiments, the quasi-colocation information of the S PEI in a PEI burst is the same. For example, the quasi-colocation information of the S PEI in a PEI burst is determined by the same higher layer parameter, reference signal, or control resource set (CORESET).

In some embodiments, the $k^{th}$ PEI burst corresponds to the $k^{th}$ transmitted SSB, where k=1, 2, ..., M, and M is a positive number (e.g. integer).

In some embodiments, the UE assumes that the $k^{th}$ PEI burst antenna port is quasi co-located (QCL) with the $k^{th}$ transmitted SSB, where k=1, 2, ..., M, and M is a positive number.

The $k^{th}$ PEI burst corresponds to the $k^{th}$ paging occasions, where k=1, 2, ..., M. In some embodiments, the UE assumes that the $k^{th}$ PEI burst antenna port is quasi co-located with the $k^{th}$ paging occasions, where k=1, 2, ..., M. In some embodiments, the UE assumes that the $k^{th}$ PEI burst antenna port is quasi co-located (QCL) with the $k^{th}$ PDCCH monitoring occasion in a paging occasion , where k=1,2,...,M.

In some embodiments, M is equal to the number of paging occasions, actual transmitted SSBs, the number of PDCCH monitoring occasions in the PO. In some embodiments, M is configured by a higher layer parameter.

In some embodiments, the information conveyed by the S PEIs in the PEI burst are the same. In some embodiments, UE is not required to detect the remaining PEI in the PEI burst if UE successfully detects a PEI.

In some embodiments, the PEI is repeated in frequency domain. For one or more frequency domain resources (e.g., subcarrier, resource block, resource block group, bandwidth part) of PEIs, the PEI can be mapped in the same way on each frequency domain resource. In some embodiments, the PEI is repeated in time domain. In some embodiments, the PEI has one or more time domain resources (e.g., symbol, slot, subframe, radio frame). For each time domain resource, the PEI can be mapped in the same way. In some embodiments, for each time domain resource, the PEI can be mapped in the same way with different scrambling code. In some embodiments, the repeated PEI is mapped to a different symbol in the same slot. That is, the PEIs with multiple beams in time domain can be presented as (PEI with beam 1, PEI with beam 1, PEI with beam 2, PEI with beam 2, and so on). In some embodiments, the repeated PEI is mapped to a different slot. In some embodiments, the repeated PEI is mapped to the adjacent slots, for example, the PEI is repeated twice, the PEIs with multiple beams in time domain can be presented as (PEI with beam 1, PEI with beam 1, PEI with beam 2, PEI with beam 2, and so on). In some embodiments, the repeated PEI is mapped to the non-adjacent slots, for example, the PEI is repeated twice, the PEIs with multiple beams in time domain can be presented as (PEI with beam 1, PEI with beam 2, ..., PEI with beam 1, PEI with beam 2, and so on).

In some embodiments, the repeated PEIs do not overlap the symbols where specific signals are transmitted. For example, the specific signal may comprise the SSB, the CSI-RS and so on. In some embodiments, a UE shall not monitor a PEI that overlaps a resource for the specific signals. In some embodiments, a UE shall not monitor a PEI that overlaps a time domain resource for the specific signals. In some embodiments, a UE shall not monitor a PEI that overlaps with a frequency domain resource for the specific signals. In some embodiments, a UE shall not monitor a PEI that overlaps a time-frequency domain resource for the specific signals. In some embodiments, a UE shall ignore the resource element (RE) that a PEI overlaps the specific signals. In some embodiments, a UE shall ignore the resource element (RE) that a PEI overlaps the specific signals on a time-frequency domain resource.

In this disclosure, different embodiments related to paging indication are shown. The main function of the paging indication is the indication whether the UE should be woken up to receive the PO or not and/or the indication whether the UE should monitor paging PDCCH or not.

There may be one or more paging indication for one PO or one PO group. The paging indication can be one of the DCI-based and sequence-based for one PO or one PO group. Alternatively, both the DCI-based and sequence-based paging indication are used for one PO or one PO group.

One PEI may be associated with one or more PO/PO groups. In some example, each PO can obtain one or more sub-groups. In some examples, a group of UEs that monitor the same PO or different POs is divided into one or more sub-groups. The mapping relation of the PEI and the PO is also described above.

With regard to the time domain location of the PEI: the SFN of the paging indication may be determined by at least one of the following: the SFN of PO and the offset between the PI and PO, $SFN\_PI = SFN\_PO - PI\_PO\_offset$; the number of POs associated with same paging indication, the UE_ID, the number of PFs in one DRX cycle and the PEI_offset. $(SFN\_PI + PI\_offset) \bmod T = X*P*(T/N)$, where $X = floor[(UE\_ID \bmod N)/P]$, the $PI\_offset \geq 0$; or the number of POs associated with same paging indication, the number of POs in one PF, the UE_ID, the number of PFs in one DRX cycle and the PEI_offset. $(SFN\_PEI + PEI\_offset) \bmod T = X*(P/Ns)*(T/N)$, where $X = floor[(UE\_ID \bmod N)/(P/Ns)]$, the $PEI\_offset \geq 0$.

The slot number in that the paging indication is located may be determined by at least one of the following: predetermined; high layer parameters; the number of beams in one paging indication burst; or the offset between paging indication and the PO.

The design of the DCI-based paging indication may comprise the DCI containing P wake-up bit fields, wherein $P \geq 1$. Each bit field may correspond to one PO or one PO group.

UE may receive the first sequence-based paging indication and the second sequence-based paging indication. The first sequence-based paging indication may correspond to multiple PO or multiple PO groups. The second sequence-based paging indication may correspond to one PO or one PO group.

UE may receive the third sequence-based paging indication. The UE may monitor a DCI-based paging indication when the UE successfully detects the third sequence-based paging indication. The UE may not wake up and neither receive the DCI-based paging indication nor paging PDCCH when the UE fails to detect the third sequence-based paging indication.

UE may receive the fourth sequence-based paging indication and the fifth sequence-based paging indication. The UE may monitor a DCI-based paging indication, and the UE may decode the paging indication in accordance with the DCI not containing sub-grouping information when the UE successfully detects the fourth sequence-based paging indication. The UE may monitor a DCI-based paging indication, and the UE may decode the paging indication in accordance with the DCI containing sub-grouping information when the UE successfully detects the fifth sequence-based paging indication. The UE may not monitor the DCI-based paging indication and may not wake up to receive the PO when neither the fourth sequence-based paging indication nor the fifth sequence-based paging indication are detected by the UE.

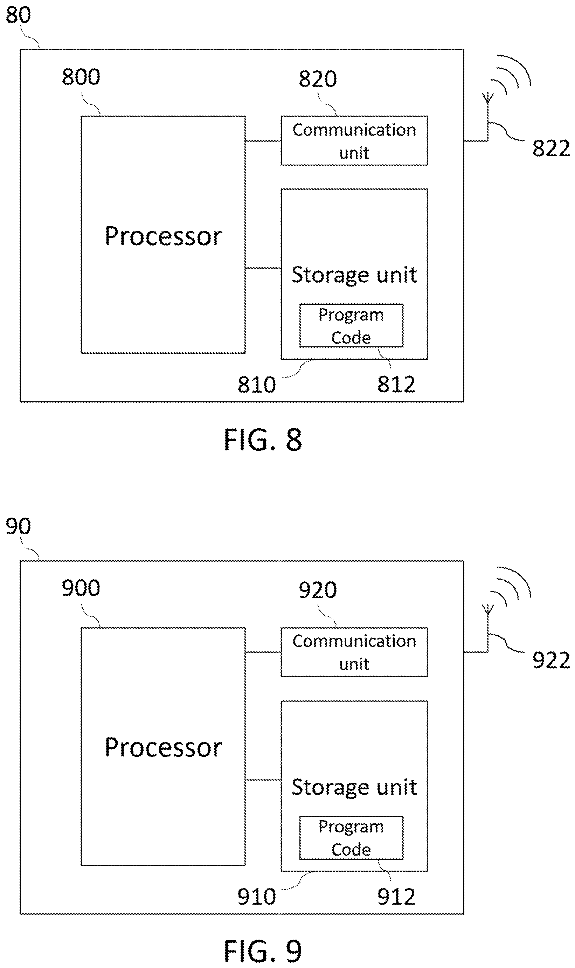

FIG. 8 relates to a schematic diagram of a wireless terminal 80 according to an embodiment of the present disclosure. The wireless terminal 80 may be a user equipment (UE), a mobile phone, a laptop, a tablet computer, an electronic book or a portable computer system and is not limited herein. The wireless terminal 80 may include a processor 800 such as a microprocessor or Application Specific Integrated Circuit (ASIC), a storage unit 810 and a communication unit 820. The storage unit 810 may be any data storage device that stores a program code 812, which is accessed and executed by the processor 800. Embodiments of the storage unit 812 include but are not limited to a subscriber identity module (SIM), read-only memory (ROM), flash memory, random-access memory (RAM), hard-disk, and optical data storage device. The communication unit 820 may a transceiver and is used to transmit and receive signals (e.g. messages or packets) according to processing results of the processor 800. In an embodiment, the communication unit 820 transmits and receives the signals via at least one antenna 822 shown in FIG. 8.

In an embodiment, the storage unit 810 and the program code 812 may be omitted and the processor 800 may include a storage unit with stored program code.

The processor 800 may implement any one of the steps in exemplified embodiments on the wireless terminal 80, e.g., by executing the program code 812.

The communication unit 820 may be a transceiver. The communication unit 820 may as an alternative or in addition be combining a transmitting unit and a receiving unit configured to transmit and to receive, respectively, signals to and from a wireless network node (e.g. a base station).

FIG. 9 relates to a schematic diagram of a wireless network node 90 according to an embodiment of the present disclosure. The wireless network node 90 may be a satellite, a base station (BS), a network entity, a Mobility Management Entity (MME), Serving Gateway (S-GW), Packet Data Network (PDN) Gateway (P-GW), a radio access network (RAN) node, a next generation RAN (NG-RAN) node, a gNB, an eNB, a gNB central unit (gNB-CU), a gNB distributed unit (gNB-DU), a gNB-CU-CP (control plane), a gNB-CU-UP (user plane), a data network, a core network or a Radio Network Controller (RNC), and is not limited herein. In addition, the wireless network node 90 may comprise (perform) at least one network function such as an access and mobility management function (AMF), a session management function (SMF), a user place function (UPF), a policy control function (PCF), an application function (AF), etc. The wireless network node 90 may include a processor 900 such as a microprocessor or ASIC, a storage unit 910 and a communication unit 920. The storage unit 910 may be any data storage device that stores a program code 912, which is accessed and executed by the processor 900. Examples of the storage unit 912 include but are not limited to a SIM, ROM, flash memory, RAM, hard-disk, and optical data storage device. The communication unit 920 may be a transceiver and is used to transmit and receive signals (e.g. messages or packets) according to processing results of the processor 900. In an example, the communication unit 920 transmits and receives the signals via at least one antenna 922 shown in FIG. 9.

In an embodiment, the storage unit 910 and the program code 912 may be omitted. The processor 900 may include a storage unit with stored program code.

The processor 900 may implement any steps described in exemplified embodiments on the wireless network node 90, e.g., via executing the program code 912.

The communication unit 920 may be a transceiver. The communication unit 920 may as an alternative or in addition be combining a transmitting unit and a receiving unit configured to transmit and to receive, respectively, signals to and from a wireless terminal (e.g. a user equipment or another wireless network node).

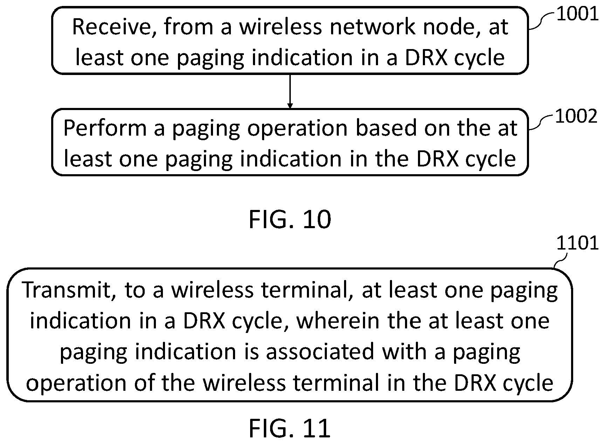

FIG. 10 shows a flowchart of a method according to an embodiment of the present disclosure. The method shown in FIG. 10 may be used in a wireless terminal (e.g. UE) and comprises the following steps:

Step 1001: Receive, from a wireless network node, at least one paging indication in a DRX cycle.

Step 1002: Perform a paging operation based on the at least one paging indication in the DRX cycle.

In FIG. 10, the wireless terminal receives at least one paging indication (e.g. a PEI or a PEI burst) from a wireless network node (e.g. gNB or BS) in a DRX cycle (e.g. paging cycle). Based on the received at least one paging indication, the wireless terminal performs a paging operation in the DRX cycle. For example, the wireless terminal may wake up and monitor at least one PO in the DRX cycle. As an alternative, the wireless terminal may remain in a sleep state (e.g. RRC idle state or RRC inactive state) and/or does not monitor POs in the DRX cycle.

In an embodiment, (each) paging indication the paging indication is conveyed by DCI or a (type of or kind of) signal. That is, (each) paging indication is a DCI-based paging indication or a sequence-based paging indication.

In an embodiment, (each) paging indication is predefined as a DCI-based paging indication or a sequence-based paging indication.

In an embodiment, (each) paging indication is determined as a DCI-based paging indication or a sequence-based paging indication based on at least one of a number of POs associated with the paging indication, a number of POs which are required to be monitored, a number of POs in a PF, a capability of the wireless terminal, a type of the wireless terminal, a higher layer parameter, or a number of sub-groups of wireless terminals in a paging occasion.

As an alternative or in addition, (each) paging indication is determined as a DCI-based paging indication or a sequence-based paging indication based on at least one of: a number of PO groups associated with the paging indication, a number of POs which are not required to be monitored, a number of PFs in the DRX cycle, a type of the DRX cycle, a value of a predefined field, an application scenario, or a number of groups of wireless terminals associated with the at least one paging indication.

As an alternative or in addition, (each) paging indication is determined as a DCI-based paging indication or a sequence-based paging indication based on at least one of: an interval between PFs, a time length of the DRX cycle, a period of synchronization signal block, a number of beams, a period of the paging indication, an interval of the paging indications, or a dedicated signaling.

In an embodiment, the number of POs associated with the at least one paging indication is predetermined.

In an embodiment, the number of POs associated with the at least one paging indication is determined based on at least one of: a higher layer parameter, a capability of the wireless terminal,
a number of PFs in the DRX cycle, a period of synchronization signal block, a number of sub-groups of wireless terminals in a paging occasion, a number of POs in a PF, or a density of POs in the DRX cycle.

As an alternative or in addition, the number of POs associated with the at least one paging indication is determined based on at least one of: a type of the wireless terminal, an application scenario, a type of the DRX cycle, a number of beams, a number of groups of wireless terminals associated with the at least one paging indication, or a period of the at least one paging indication.

As an alternative or in addition, the number of POs associated with the at least one paging indication is determined based on at least one of: an interval between PFs, or a time length of the DRX cycle.

In an embodiment, at least one PO associated with the at least one paging indication is determined based on at least one of: a wireless terminal identifier associated with the at least one paging indication, a wireless terminal sub-group identifier associated with the at least one paging indication, a wireless terminal group identifier of the at least one paging indication, or a number of POs in a PF.

As an alternative or in addition, the at least one PO associated with the at least one paging indication is determined based on at least one of: a number of PFs in the DRX cycle, at least one index of the at least one PO, or a number of the least one PO associated with the first paging indication.

In an embodiment, a time domain location (e.g. SFN) of the at least one paging indication is determined based on at least one of: at least one SFN of at least one PO associated with the at least one paging indication, a number of POs associated with single paging indication, a number of PFs in the DRX cycle, a number of POs in a PF, a wireless terminal identifier associated with the at least one paging indication, a number of wireless terminal sub-groups associated with the at least one paging indication, or an offset between the at least one paging indication and the first PO associated with the at least one paging indication.

As an alternative or in addition, the time domain location (e.g. SFN) of the at least one paging indication is determined based on at least one of: a time length of the DRX cycle, a number of wireless terminal sub-groups associated with a paging occasion, a wireless terminal sub-group identifier associated with the at least one PO, a number of wireless terminal groups associated with the at least one paging indication, a wireless terminal group identifier of the at least one paging indication, an interval between PFs, or a period of synchronization signal block.

As an alternative or in addition, the time domain location (e.g. SFN) of the at least one paging indication is determined based on at least one of: a type of the DRX cycle, a time length of the DRX cycle, a number of beams, or a period of the at least one paging indication.

In an embodiment, a time domain location of the at least one paging indication is determined based on at least one system frame number of at least one paging occasion associated with the at least one paging indication and an offset between the at least one paging indication and the first paging occasion associated with the at least one paging indication. For example, the time domain location of the at least one paging indication is determined by:

$$SFN\_PEI = SFN\_PO - PEI\_PO\_offset,$$

or

$$SFN\_PEI = (1024 + SFN\_PO - PEI\_PO\_offset) \bmod 1024,$$

wherein: SFN_PEI is the time domain location of the at least one paging indication, SFO_PO is a system frame number of the first paging occasion associated with the at least one paging indication, and PEI_PO_offset is the offset between the at least one paging indication and the first paging occasion associated with the at least one paging indication.

In an embodiment, a time domain location of the at least one paging indication is determined based on at least one of a number of paging occasions associated with a paging indication, a wireless terminal identifier associated with the at least one paging indication, a number of paging frames in the DRX cycle or an offset between the at least one paging indication and the first paging occasion associated with the at least one paging indication. For example, the time domain location of the at least one paging indication is determined by:

$$(SFN\_PEI + PEI\_offset) \bmod T = X*P*(T/N),$$

wherein: SFN_PEI is the time domain location of the at least one paging indication, PEI_offset is the offset between the at least one paging indication and the first paging occasion associated with the at least one paging indication, T is a time length of the DRX cycle, X is X = floor[(UE_ID mod N)/P], P is a number of wireless terminal identifiers corresponding to the same paging indication, N is a number of paging frames in the DRX cycle, UE_ID is a wireless terminal identifier associated with the at least one paging indication, and floor is a floor function.

In an embodiment, a time domain location of the at least one paging indication is determined based on at least one of a number of POs corresponding to the at least one PO, a number of POs in single PF, a wireless terminal identifier associated with the at least one paging indication, a number of PFs in the DRX cycle, and an offset between the at least one paging indication and the first PO associated with the at least one paging indication. For example, the time domain location of the at least one paging indication is determined by:

$$(SFN\_PEI + PEI\_offset) \bmod T = X*(P/Ns)*(T/N),$$

wherein: SFN_PEI is the time domain location of the at least one paging indication, PEI_offset is the offset between the at least one paging indication and the first PO associated with the at least one paging indication, T is a time length of the DRX cycle, X = floor [(UE_ID mod N)/(P/Ns)], P is a number of wireless terminal identifiers corresponding to the same paging indication, N is the number of PFs in the DRX cycle, Ns is a number of POs in a PF, UE_ID is a wireless terminal identifier associated with the at least one paging indication, and floor is a floor function.

In an embodiment, the at least one paging indication comprises a DCI-based paging indication, wherein the DCI-based paging indication comprises a bitmap indicating the paging operation.

In an embodiment, the indicated paging operation comprises monitoring at least one PO in the DRX cycle or remaining in an idle state or an inactive state in the DRX cycle. That is, based on the at least one paging indication, the wireless terminal may wake up to monitor the PO(s) or does not wake up to monitor the PO(s) (i.e. remains in sleep) in the DRX cycle.

In an embodiment, the paging indication comprises at least one bit field, wherein each bit field is associated with a PO, a group of POs or a number of wireless terminal sub-groups corresponding to a PO.

In an embodiment, each bit field comprises 1 bit and is associated with a PO. In this embodiment, the paging status indicated by each bit field is determined based on at least one of: a number of wireless terminal groups corresponding to the PO, a number of wireless terminal sub-groups corresponding to the PO, a number wireless terminal sub-groups required to monitor the PO, or a number wireless terminal sub-groups not required to monitor the PO.

In an embodiment, each bit field comprises S bit(s), where S is a non-negative value (e.g. integer) and is determined based on a number of wireless terminal sub-groups corresponding to the PO or the group of POs.

In an embodiment, the at least one paging indication comprises a first sequence-based paging indication and a second sequence-based paging indication. The first sequence-based paging indication indicates (UEs corresponding to a plurality of POs or a plurality of PO groups) whether to monitor corresponds to a plurality of POs or a plurality of PO groups. The second sequence-based paging indication indicates (UEs corresponding to a PO or a PO group) whether to monitor a PO or a PO group.

In an embodiment, the at least one paging indication comprises a third sequence-based paging indication, wherein the third sequence-based paging indication indicates (the wireless terminal) whether to monitor a DCI-based paging indication. When successfully detecting the third sequence-based paging indication, the wireless terminal monitors the DCI-based paging indication.

In an embodiment, the at least one paging indication comprises a fourth sequence-based paging indication and a fifth sequence-based paging indication. When at least one of the fourth sequence-based paging indication or the fifth sequence-based indication is successfully detected the method further comprises:

monitoring a DCI-based paging indication, and

decoding the DCI-based paging indication in accordance with the DCI not comprising sub-grouping information when the fourth sequence-based paging indication is successfully detected, and

decoding the DCI-based paging indication in accordance with the downlink control information comprising sub-grouping information when the fourth sequence-based paging indication is successfully detected.

FIG. 11 shows a flowchart of a method according to an embodiment of the present disclosure. The method shown in FIG. 11 may be used in a wireless network node (e.g., a BS or a gNB) and comprises the following step:
Step 1101: Transmit, to a wireless terminal, at least one paging indication in a DRX cycle, wherein the at least one paging indication is associated with a paging operation of the wireless terminal in the DRX cycle.

In an embodiment, (each) paging indication the paging indication is conveyed by DCI or a (type of or kind of) signal. That is, (each) paging indication is a DCI-based paging indication or a sequence-based paging indication.

In an embodiment, (each) paging indication is predefined as a DCI-based paging indication or a sequence-based paging indication.

In an embodiment, (each) paging indication is determined as a DCI-based paging indication or a sequence-based paging indication based on at least one of: a number of paging occasions associated with the paging indication, a number of paging occasions in a paging frame, a higher layer parameter, a number of sub-groups of wireless terminals in a PO, a number of groups of wireless terminals associated with the at least one paging indication, or a period of synchronization signal block.

In an embodiment, the number of POs associated with the at least one paging indication is predetermined.

In an embodiment, the number of POs associated with the at least one paging indication is determined based on at least one of: a higher layer parameter, a number of PFs in the DRX cycle, a period of synchronization signal block, a number of sub-groups of wireless terminals in a PO, a number of POs in a PF, or a density of POs in the DRX cycle.

As an alternative or in addition, the number of POs associated with the at least one paging indication is determined based on at least one of: a type of the wireless terminal, an application scenario, a type of the DRX cycle, a number of beams, a number of groups of wireless terminals associated with the at least one paging indication, or a period of the at least one paging indication.

As an alternative or in addition, the number of POs associated with the at least one paging indication is determined based on at least one of: an interval between PFs, or a time length of the DRX cycle.

In an embodiment, at least one PO associated with the at least one paging indication is determined based on at least one of: a wireless terminal identifier associated with the at least one paging indication, a wireless terminal sub-group identifier associated with the at least one paging indication, a wireless terminal group identifier of the at least one paging indication, a number of POs in a PF, or a number of PFs in the DRX cycle.

In an embodiment, a time domain location (e.g. SFN) of the at least one paging indication is determined based on at least one of: at least one SFN of at least one PO associated with the at least one paging indication, a number of POs associated with single paging indication, a number of PFs in the DRX cycle, a number of POs in a PF, a wireless terminal identifier associated with the at least one paging indication, a number of wireless terminal sub-groups associated with the at least one paging indication, or an offset between the at least one paging indication and the first PO associated with the at least one paging indication.

As an alternative or in addition, the time domain location (e.g. SFN) of the at least one paging indication is determined based on at least one of: a time length of the DRX cycle, a number of wireless terminal sub-groups associated with single PO, a wireless terminal sub-group identifier associated with the at least one PO, a number of wireless terminal groups associated with the at least one paging indication, a wireless terminal group identifier of the at least one paging indication, an interval between PFs, or a period of synchronization signal block.

As an alternative or in addition, the time domain location (e.g. SFN) of the at least one paging indication is determined based on at least one of: a type of the DRX cycle, a time length of the DRX cycle, a number of beams, or a period of the at least one paging indication.

In an embodiment, a time domain location of the at least one paging indication is determined based on at least one system frame number of at least one paging occasion associated with the at least one paging indication and an offset between the at least one paging indication and the first paging occasion associated with the at least one paging indication. For example, the time domain location of the at least one paging indication is determined by:

$$\text{SFN\_PEI} = \text{SFN\_PO} - \text{PEI\_PO\_offset},$$

or

$$\text{SFN\_PEI} = (1024 + \text{SFN\_PO} - \text{PEI\_PO\_offset}) \bmod 1024,$$

wherein: SFN_PEI is the time domain location of the at least one paging indication, SFO_PO is a system frame number of the first paging occasion associated with the at least one paging indication, and PEI_PO_offset is the offset between the at least one paging indication and the first paging occasion associated with the at least one paging indication.

In an embodiment, a time domain location of the at least one paging indication is determined based on at least one of a number of paging occasions associated with a paging indication, a wireless terminal identifier associated with the at least one paging indication, a number of paging frames in the DRX cycle or an offset between the at least one paging indication and the first paging occasion associated with the at least one paging indication. For example, the time domain location of the at least one paging indication is determined by:

$$(\text{SFN\_PEI} + \text{PEI\_offset}) \bmod T = X*P*(T/N),$$

wherein: SFN_PEI is the time domain location of the at least one paging indication, PEI_offset is the offset between the at least one paging indication and the first paging occasion associated with the at least one paging indication, T is a time length of the DRX cycle, X is $X = \text{floor}[(\text{UE ID} \bmod N)/P]$, P is a number of wireless terminal identifiers corresponding to the same paging indication, N is a number of paging frames in the DRX cycle, UE_ID is a wireless terminal identifier associated with the at least one paging indication, and floor is a floor function.

In an embodiment, a time domain location of the at least one paging indication is determined based on at least one of a number of POs corresponding to the at least one PO, a number of POs in single PF, a wireless terminal identifier associated with the at least one paging indication, a number of PFs in the DRX cycle, and an offset between the at least one paging indication and the first PO associated with the at least one paging indication. For example, the time domain location of the at least one paging indication is determined by:

$$(\text{SFN\_PEI}+\text{PEI\_offset}) \bmod T = X*(P/Ns)*(T/N),$$

wherein: SFN_PEI is the time domain location of the at least one paging indication, PEI_offset is the offset between the at least one paging indication and the first PO associated with the at least one paging indication, T is a time length of the DRX cycle, $X = \text{floor}[(\text{UE\_ID} \bmod N)/(P/Ns)]$, P is a number of wireless terminal identifiers corresponding to the same paging indication, N is the number of PFs in the DRX cycle, Ns is a number of POs in a PF, UE_ID is a wireless terminal identifier associated with the at least one paging indication, and floor is a floor function.

In an embodiment, the at least one paging indication comprises a DCI-based paging indication, wherein the DCI-based paging indication comprises a bitmap indicating the paging operation.

In an embodiment, the indicated paging operation comprises monitoring at least one PO in the DRX cycle, or remaining in an idle state or an inactive state in the DRX cycle. That is, based on the at least one paging indication, the wireless terminal may wake up to monitor the PO(s) or does not wake up to monitor the PO(s) (i.e. remains in sleep) in the DRX cycle.

In an embodiment, the paging indication comprises at least one bit field, wherein each bit field is associated with a PO, a group of POs or a number of wireless terminal sub-groups corresponding to a PO.

In an embodiment, each bit field comprises 1 bit and is associated with a PO. In this embodiment, the paging status indicated by each bit field is determined based on at least one of: a number of wireless terminal groups corresponding to the PO, a number of wireless terminal sub-groups corresponding to the PO, a number wireless terminal sub-groups required to monitor the PO, or a number wireless terminal sub-groups not required to monitor the PO.

In an embodiment, each bit field comprises S bit(s), where S is a non-negative value (e.g. integer) and is determined based on a number of wireless terminal sub-groups corresponding to the PO or the group of POs.

In an embodiment, the at least one paging indication comprises a first sequence-based paging indication and a second sequence-based paging indication. The first sequence-based paging indication indicates (UEs corresponding to a plurality of POs or a plurality of PO groups) whether to monitor corresponds to a plurality of POs or a plurality of PO groups. The second sequence-based paging indication indicates (UEs corresponding to a PO or a PO group) whether to monitor a PO or a PO group.

In an embodiment, the at least one paging indication comprises a third sequence-based paging indication, wherein the third sequence-based paging indication indicates (the wireless terminal) whether to monitor a DCI-based paging indication. When successfully detecting the third sequence-based paging indication, the wireless terminal monitors the DCI-based paging indication.

In an embodiment, the at least one paging indication comprises at least one of a fourth sequence-based paging indication and a fifth sequence-based paging indication. In this embodiment, the wireless network node may further transmit a DCI-based paging indication. The DCI-based paging indication is encoded in accordance with the DCI not comprising (e.g. without) sub-grouping information when the fourth sequence-based paging indication is transmitted. As an alternative, the DCI-based paging indication is encoded in accordance with the downlink control information comprising sub-grouping information when the fifth sequence-based paging indication is transmitted.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

**Claims**

1. A wireless communication method for use in a wireless terminal, the method comprising:

   receiving, from a wireless network node, at least one paging indication in a discontinuous reception, DRX, cycle, and
   performing a paging operation based on the at least one paging indication in the DRX cycle,
   wherein a number of paging occasions associated with the at least one paging indication is determined based on a higher layer parameter,
   wherein the at least one paging indication comprises a downlink-control-information based paging indication,
   **characterized in that** the downlink-control-information based paging indication comprises a bitmap indicating the paging operation,
   wherein the paging indication comprises at least one bit field, wherein each bit field is associated with a group of paging occasions, wherein each bit field comprises S bit(s), where S is a non-negative value and determined based on a number of wireless terminal sub-groups corresponding to the group of paging occasions, and
   wherein the number of wireless terminal sub-groups equals to a product of a number of paging occasions associated with the at least one paging indication and a number of sub-groups contained in each paging occasion.

2. The wireless communication method of claim 1, wherein the paging indication is a downlink-control-information-based paging indication.

3. The wireless communication method of claim 1 or 2, wherein a number of paging occasions associated with the at least one paging indication is predetermined.

4. The wireless communication method of any of claims 1 to 3, wherein the indicated paging operation comprises:

   monitoring at least one paging occasion in the DRX cycle, or
   remaining in an idle state or an inactive state in the DRX cycle.

5. A wireless communication method for use in a wireless network node, the method comprising:

   transmitting, to a wireless terminal, at least one paging indication in a discontinuous reception, DRX, cycle,
   wherein the at least one paging indication is associated with a paging operation of the wireless terminal in the DRX cycle, and
   wherein a number of paging occasions associated with the at least one paging indication is determined based on a higher layer parameter,
   wherein the at least one paging indication comprises a downlink-control-information based paging indication,
   **characterized in that** the downlink-control-information based paging indication comprises a bitmap indicating the paging operation,
   wherein the paging indication comprises at least one bit field, wherein each bit field is associated with a group of paging occasions, wherein each bit field comprises S bit(s), where S is a non-negative value and determined based on a number of wireless terminal sub-groups corresponding to the group of paging occasions, and
   wherein the number of wireless terminal sub-groups equals to a product of a number of paging occasions associated with the at least one paging indication and a number of sub-groups contained in each paging occasion.

6. The wireless communication method of claim 5, wherein the paging indication is predefined as a downlink-control-information-based paging indication.

7. The wireless communication method of any of claims 5 to 6, wherein the indicated paging operation comprises:

   monitoring at least one paging occasion in the DRX cycle, or
   remaining in an idle state or an inactive state in the DRX cycle.

8. A wireless terminal (80), comprising:

a communication unit (820), configured to receive, from a wireless network node, at least one paging indication in a discontinuous reception, DRX, cycle, and
a processor (800) configured to perform a paging operation based on the at least one paging indication in the DRX cycle,
wherein a number of paging occasions associated with the at least one paging indication is determined based on a higher layer parameter,
wherein the at least one paging indication comprises a downlink-control-information based paging indication, **characterized in that** the downlink-control-information based paging indication comprises a bitmap indicating the paging operation,
wherein the paging indication comprises at least one bit field, wherein each bit field is associated with a group of paging occasions, wherein each bit field comprises S bit(s), where S is a non-negative value and determined based on a number of wireless terminal sub-groups corresponding to the group of paging occasions, and
wherein the number of wireless terminal sub-groups equals to a product of a number of paging occasions associated with the at least one paging indication and a number of sub-groups contained in each paging occasion.

9. The wireless terminal of claim 8, wherein the processor is further configured to perform a wireless communication method of any one of claims 2 to 4.

10. A wireless network node (90), comprising:

a communication unit (920), configured to transmit, to a wireless terminal, at least one paging indication in a discontinuous reception, DRX, cycle,
wherein the at least one paging indication is associated with a paging operation of the wireless terminal in the DRX cycle, and
wherein a number of paging occasions associated with the at least one paging indication is determined based on a higher layer parameter,
wherein the at least one paging indication comprises a downlink-control-information based paging indication, **characterized in that** the downlink-control-information based paging indication comprises a bitmap indicating the paging operation,
wherein the paging indication comprises at least one bit field, wherein each bit field is associated with a group of paging occasions, wherein each bit field comprises S bit(s), where S is a non-negative value and determined based on a number of wireless terminal sub-groups corresponding to the group of paging occasions, and
wherein the number of wireless terminal sub-groups equals to a product of a number of paging occasions associated with the at least one paging indication and a number of sub-groups contained in each paging occasion.

11. The wireless network node of claim 10, further comprising a processor (900) configured to perform a wireless communication method of any one of claims 6 to 7.

12. A computer program product comprising a computer-readable program medium code (8 2,912) stored thereupon, the code, when executed by a processor (800,900), causing the processor (800,900) to implement a wireless communication method recited in any one of claims 1 to 4 or 5 to 7.

**Patentansprüche**

1. Drahtloskommunikationsverfahren zur Verwendung in einem Drahtlosendgerät, das Verfahren aufweisend:

Empfangen, von einem Drahtlosnetzwerkknoten, mindestens einer Paging-Indikation in einem diskontinuierlichen Empfangszyklus, DRX-Zyklus, und
Durchführen eines Paging-Vorgangs basierend auf der mindestens einen Paging-Indikation in dem DRX-Zyklus, wobei eine Anzahl von Paging-Gelegenheiten, die mit der mindestens einen Paging-Indikation verknüpft sind, basierend auf einem Parameter höherer Schicht bestimmt wird,
wobei die mindestens eine Paging-Indikation eine auf Downlink-Steuerinformationen basierende Paging-Indikation aufweist,
**dadurch gekennzeichnet, dass** die auf Downlink-Steuerinformationen basierende Paging-Indikation eine Bitmap aufweist, die den Paging-Vorgang indiziert,
wobei die Paging-Indikation mindestens ein Bitfeld aufweist, wobei jedes Bitfeld mit einer Gruppe von Paging-Gelegenheiten verknüpft ist, wobei jedes Bitfeld S Bit(s) aufweist, wobei S ein nicht-negativer Wert ist und basierend auf einer Anzahl von Drahtlosendgerätuntergruppen bestimmt wird, die der Gruppe von Paging-Gelegenheiten entsprechen, und

wobei die Anzahl der Drahtlosendgerätuntergruppen einem Produkt aus einer Anzahl von Paging-Gelegenheiten, die mit der mindestens einen Paging-Indikation verknüpft sind, und einer Anzahl von Untergruppen, die in jeder Paging-Gelegenheit enthalten sind, entspricht.

2. Drahtloskommunikationsverfahren nach Anspruch 1, wobei die Paging-Indikation eine auf Downlink-Steuerinformationen basierende Paging-Indikation ist.

3. Drahtloskommunikationsverfahren nach Anspruch 1 oder 2, wobei eine Anzahl von Paging-Gelegenheiten, die mit der mindestens einen Paging-Indikation verknüpft sind, vorbestimmt ist.

4. Drahtloskommunikationsverfahren nach einem der Ansprüche 1 bis 3, wobei der indiziertePaging-Vorgang aufweist:

Überwachen mindestens einer Paging-Gelegenheit in dem DRX-Zyklus, oder
Verbleiben in einem Leerlaufzustand oder einem inaktiven Zustand in dem DRX-Zyklus.

5. Drahtloskommunikationsverfahren zur Verwendung in einem Drahtlosnetzwerkknoten, das Verfahren aufweisend:

Übertragen, an ein Drahtlosendgerät, mindestens einer Paging-Indikation in einem diskontinuierlichen Empfangszyklus, DRX-Zyklus,
wobei die mindestens eine Paging-Indikation mit einem Paging-Vorgang des Drahtlosendgeräts in dem DRX-Zyklus verknüpft ist, und
wobei eine Anzahl von Paging-Gelegenheiten, die mit der mindestens einen Paging-Indikation verknüpft sind, basierend auf einem Parameter höherer Schicht bestimmt wird,
wobei die mindestens eine Paging-Indikation eine auf Downlink-Steuerinformationen basierende Paging-Indikation aufweist,
**dadurch gekennzeichnet, dass** die auf Downlink-Steuerinformationen basierende Paging-Indikation eine Bitmap aufweist, die den Paging-Vorgang indiziert,
wobei die Paging-Indikation mindestens ein Bitfeld aufweist, wobei jedes Bitfeld mit einer Gruppe von Paging-Gelegenheiten verknüpft ist, wobei jedes Bitfeld S Bit(s) aufweist, wobei S ein nicht-negativer Wert ist und basierend auf einer Anzahl von Drahtlosendgerätuntergruppen bestimmt wird, die der Gruppe von Paging-Gelegenheiten entsprechen, und
wobei die Anzahl der Drahtlosendgerätuntergruppen einem Produkt aus einer Anzahl von Paging-Gelegenheiten, die mit der mindestens einen Paging-Indikation verknüpft sind, und einer Anzahl von Untergruppen, die in jeder Paging-Gelegenheit enthalten sind, entspricht.

6. Drahtloskommunikationsverfahren nach Anspruch 5, wobei die Paging-Indikation als eine auf Downlink-Steuerinformationen basierende Paging-Indikation vorgegeben ist.

7. Drahtloskommunikationsverfahren nach einem der Ansprüche 5 bis 6, wobei der indiziertPaging-Vorgang aufweist:

Überwachen mindestens einer Paging-Gelegenheit in dem DRX-Zyklus, oder
Verbleiben in einem Leerlaufzustand oder einem inaktiven Zustand in dem DRX-Zyklus.

8. Drahtlosendgerät (80), aufweisend:

eine Kommunikationseinheit (820), die dazu eingerichtet ist, von einem Drahtlosnetzwerkknoten mindestens eine Paging-Indikation in einem diskontinuierlichen Empfangszyklus, DRX-Zyklus, zu empfangen, und
einen Prozessor (800), der dazu eingerichtet ist, einen Paging-Vorgang basierend auf der mindestens einen Paging-Indikation in dem DRX-Zyklus durchzuführen,
wobei eine Anzahl von Paging-Gelegenheiten, die mit der mindestens einen Paging-Indikation verknüpft sind, basierend auf einem Parameter höherer Schicht bestimmt wird,
wobei die mindestens eine Paging-Indikation eine auf Downlink-Steuerinformationen basierende Paging-Indikation aufweist,
**dadurch gekennzeichnet, dass** die auf Downlink-Steuerinformationen basierende Paging-Indikation eine Bitmap aufweist, die den Paging-Vorgang indiziert,
wobei die Paging-Indikation mindestens ein Bitfeld aufweist, wobei jedes Bitfeld mit einer Gruppe von Paging-Gelegenheiten verknüpft ist, wobei jedes Bitfeld S Bit(s) aufweist, wobei S ein nicht-negativer Wert ist und basierend auf einer Anzahl von Drahtlosendgerätuntergruppen bestimmt wird, die der Gruppe von Paging-Gelegenheiten entsprechen, und

wobei die Anzahl der Drahtlosendgerätuntergruppen einem Produkt aus einer Anzahl von Paging-Gelegenheiten, die mit der mindestens einen Paging-Indikation verknüpft sind, und einer Anzahl von Untergruppen, die in jeder Paging-Gelegenheit enthalten sind, entspricht.

9. Drahtlosendgerät nach Anspruch 8, wobei der Prozessor ferner dazu eingerichtet ist, ein Drahtloskommunikationsverfahren nach einem der Ansprüche 2 bis 4 durchzuführen.

10. Drahtlosnetzwerkknoten (90), aufweisend:

eine Kommunikationseinheit (920), die dazu eingerichtet ist, an ein Drahtlosendgerät mindestens eine Paging-Indikation in einem diskontinuierlichen Empfangszyklus, DRX-Zyklus, zu übertragen,

wobei die mindestens eine Paging-Indikation mit einem Paging-Vorgang des Drahtlosendgeräts in dem DRX-Zyklus verknüpft ist, und

wobei eine Anzahl von Paging-Gelegenheiten, die mit der mindestens einen Paging-Indikation verknüpft sind, basierend auf einem Parameter höherer Schicht bestimmt wird,

wobei die mindestens eine Paging-Indikation eine auf Downlink-Steuerinformationen basierende Paging-Indikation aufweist,

**dadurch gekennzeichnet, dass** die auf Downlink-Steuerinformationen basierende Paging-Indikation eine Bitmap aufweist, die den Paging-Vorgang indiziert,

wobei die Paging-Indikation mindestens ein Bitfeld aufweist, wobei jedes Bitfeld mit einer Gruppe von Paging-Gelegenheiten verknüpft ist, wobei jedes Bitfeld S Bit(s) aufweist, wobei S ein nicht-negativer Wert ist und basierend auf einer Anzahl von Drahtlosendgerätuntergruppen bestimmt wird, die der Gruppe von Paging-Gelegenheiten entsprechen, und

wobei die Anzahl der Drahtlosendgerätuntergruppen einem Produkt aus einer Anzahl von Paging-Gelegenheiten, die mit der mindestens einen Paging-Indikation verknüpft sind, und einer Anzahl von Untergruppen, die in jeder Paging-Gelegenheit enthalten sind, entspricht.

11. Drahtlosnetzwerkknoten nach Anspruch 10, ferner aufweisend einen Prozessor (900), der dazu eingerichtet ist, ein Drahtloskommunikationsverfahren nach einem der Ansprüche 6 bis 7 durchzuführen.

12. Computerprogrammprodukt, aufweisend einen darauf gespeicherten computerlesbaren Programmmediumcode (812, 912), wobei der Code, wenn er durch einen Prozessor (800, 900) ausgeführt wird, den Prozessor (800, 900) veranlasst, ein Drahtloskommunikationsverfahren nach einem der Ansprüche 1 bis 4 oder 5 bis 7 zu implementieren.

## Revendications

1. Procédé de communication sans fil destiné à être utilisé dans un terminal sans fil, le procédé comprenant :

la réception, à partir d'un nœud de réseau sans fil, d'au moins une indication de radiomessagerie dans un cycle de réception discontinue, DRX, et

la réalisation d'une opération de radiomessagerie sur la base de l'au moins une indication de radiomessagerie dans le cycle DRX,

dans lequel un nombre d'occasions de radiomessagerie associées à l'au moins une indication de radiomessagerie est déterminé sur la base d'un paramètre de couche supérieure,

dans lequel l'au moins une indication de radiomessagerie comprend une indication de radiomessagerie basée sur des informations de commande de liaison descendante,

**caractérisé en ce que** l'indication de radiomessagerie basée sur des informations de commande de liaison descendante comprend une table de bits indiquant l'opération de radiomessagerie,

dans lequel l'indication de radiomessagerie comprend au moins un champ de bits, dans lequel chaque champ de bits est associé à un groupe d'occasions de radiomessagerie, dans lequel chaque champ de bits comprend S bit(s), où S est une valeur non négative et est déterminée sur la base d'un nombre de sous-groupes de terminaux sans fil correspondant au groupe d'occasions de radiomessagerie, et

dans lequel le nombre de sous-groupes de terminaux sans fil est égal à un produit d'un nombre d'occasions de radiomessagerie associées à l'au moins une indication de radiomessagerie et d'un nombre de sous-groupes contenus dans chaque occasion de radiomessagerie.

2. Procédé de communication sans fil selon la revendication 1, dans lequel l'indication de radiomessagerie est une indication de radiomessagerie basée sur des informations de commande de liaison descendante.

3. Procédé de communication sans fil selon la revendication 1 ou 2, dans lequel un nombre d'occasions de radiomessagerie associées à l'au moins une indication de radiomessagerie est prédéterminé.

4. Procédé de communication sans fil selon l'une quelconque des revendications 1 à 3, dans lequel l'opération de radiomessagerie indiquée comprend :

   la surveillance d'au moins une occasion de radiomessagerie dans le cycle DRX, ou
   le fait de rester dans un état de veille ou un état inactif dans le cycle DRX.

5. Procédé de communication sans fil à utiliser dans un nœud de réseau sans fil, le procédé comprenant :

   la transmission, à un terminal sans fil, d'au moins une indication de radiomessagerie dans un cycle de réception discontinue, DRX,
   dans lequel l'au moins une indication de radiomessagerie est associée à une opération de radiomessagerie du terminal sans fil dans le cycle DRX, et
   dans lequel un nombre d'occasions de radiomessagerie associées à l'au moins une indication de radiomessagerie est déterminé sur la base d'un paramètre de couche supérieure,
   dans lequel l'au moins une indication de radiomessagerie comprend une indication de radiomessagerie basée sur des informations de commande de liaison descendante,
   **caractérisé en ce que** l'indication de radiomessagerie basée sur des informations de commande de liaison descendante comprend une table de bits indiquant l'opération de radiomessagerie,
   dans lequel l'indication de radiomessagerie comprend au moins un champ de bits, dans lequel chaque champ de bits est associé à un groupe d'occasions de radiomessagerie, dans lequel chaque champ de bits comprend S bit(s), où S est une valeur non négative et est déterminée sur la base d'un nombre de sous-groupes de terminaux sans fil correspondant au groupe d'occasions de radiomessagerie, et
   dans lequel le nombre de sous-groupes de terminaux sans fil est égal à un produit d'un nombre d'occasions de radiomessagerie associées à l'au moins une indication de radiomessagerie et d'un nombre de sous-groupes contenus dans chaque occasion de radiomessagerie.

6. Procédé de communication sans fil selon la revendication 5, dans lequel l'indication de radiomessagerie est prédéfinie en tant qu'indication de radiomessagerie basée sur des informations de commande de liaison descendante.

7. Procédé de communication sans fil selon l'une quelconque des revendications 5 à 6, dans lequel l'opération de radiomessagerie indiquée comprend :

   la surveillance d'au moins une occasion de radiomessagerie dans le cycle DRX, ou
   le fait de rester dans un état de veille ou un état inactif dans le cycle DRX.

8. Terminal sans fil (80), comprenant :

   une unité de communication (820), configurée pour recevoir, à partir d'un nœud de réseau sans fil, au moins une indication de radiomessagerie dans un cycle de réception discontinue, DRX, et
   un processeur (800) configuré pour réaliser une opération de radiomessagerie sur la base de l'au moins une indication de radiomessagerie dans le cycle DRX,
   dans lequel un nombre d'occasions de radiomessagerie associées à l'au moins une indication de radiomessagerie est déterminé sur la base d'un paramètre de couche supérieure,
   dans lequel l'au moins une indication de radiomessagerie comprend une indication de radiomessagerie basée sur des informations de commande de liaison descendante,
   **caractérisé en ce que** l'indication de radiomessagerie basée sur des informations de commande de liaison descendante comprend une table de bits indiquant l'opération de radiomessagerie,
   dans lequel l'indication de radiomessagerie comprend au moins un champ de bits, dans lequel chaque champ de bits est associé à un groupe d'occasions de radiomessagerie, dans lequel chaque champ de bits comprend S bit(s), où S est une valeur non négative et est déterminée sur la base d'un nombre de sous-groupes de terminaux sans fil correspondant au groupe d'occasions de radiomessagerie, et

dans lequel le nombre de sous-groupes de terminaux sans fil est égal à un produit d'un nombre d'occasions de radiomessagerie associées à l'au moins une indication de radiomessagerie et d'un nombre de sous-groupes contenus dans chaque occasion de radiomessagerie.

**9.** Terminal sans fil selon la revendication 8, dans lequel le processeur est en outre configuré pour réaliser un procédé de communication sans fil selon l'une quelconque des revendications 2 à 4.

**10.** Nœud de réseau sans fil (90), comprenant :

une unité de communication (920), configurée pour transmettre, à un terminal sans fil, au moins une indication de radiomessagerie dans un cycle de réception discontinue, DRX,

dans lequel l'au moins une indication de radiomessagerie est associée à une opération de radiomessagerie du terminal sans fil dans le cycle DRX, et

dans lequel un nombre d'occasions de radiomessagerie associées à l'au moins une indication de radiomessagerie est déterminé sur la base d'un paramètre de couche supérieure,

dans lequel l'au moins une indication de radiomessagerie comprend une indication de radiomessagerie basée sur des informations de commande de liaison descendante,

**caractérisé en ce que** l'indication de radiomessagerie basée sur des informations de commande de liaison descendante comprend une table de bits indiquant l'opération de radiomessagerie,

dans lequel l'indication de radiomessagerie comprend au moins un champ de bits, dans lequel chaque champ de bits est associé à un groupe d'occasions de radiomessagerie, dans lequel chaque champ de bits comprend S bit(s), où S est une valeur non négative et est déterminée sur la base d'un nombre de sous-groupes de terminaux sans fil correspondant au groupe d'occasions de radiomessagerie, et

dans lequel le nombre de sous-groupes de terminaux sans fil est égal à un produit d'un nombre d'occasions de radiomessagerie associées à l'au moins une indication de radiomessagerie et d'un nombre de sous-groupes contenus dans chaque occasion de radiomessagerie.

**11.** Nœud de réseau sans fil selon la revendication 10, comprenant en outre un processeur (900) configuré pour réaliser un procédé de communication sans fil selon l'une quelconque des revendications 6 à 7.

**12.** Produit-programme d'ordinateur comprenant un code de support de programme lisible par ordinateur (812, 912) stocké sur celui-ci, le code, lorsqu'il est exécuté par un processeur (800, 900), amène le processeur (800, 900) à mettre en œuvre un procédé de communication sans fil selon l'une quelconque des revendications 1 à 4 ou 5 à 7.

PO

**FIG. 1**

PO

**FIG. 2**

associated with one PEI          associated with one PEI

PO

**FIG. 3**

FIG. 4

FIG. 5

PEI

the first
bit field
S1 = 1

the second bit field
S2 = 8

# FIG. 6

PEI

the first
bit field
S1 = 4

the second
bit field
S2 = 4

the third
bit field
S3 = 4

# FIG. 7

80

800 820

Processor

Communication
unit

822

Storage unit

Program
Code

810 812

FIG. 8

90

900 920

Processor

Communication
unit

922

Storage unit

Program
Code

910 912

FIG. 9

Receive, from a wireless network node, at least one paging indication in a DRX cycle ⌐1001

Perform a paging operation based on the at least one paging indication in the DRX cycle ⌐1002

## FIG. 10

1101

Transmit, to a wireless terminal, at least one paging indication in a DRX cycle, wherein the at least one paging indication is associated with a paging operation of the wireless terminal in the DRX cycle

## FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020322918 A1

**Non-patent literature cited in the description**

- **VIVO**. Discussion on paging grouping. *3GPP DRAFT; R1-2007675*

- **CATT**. Details of PEI configuration. *3GPP DRAFT; R1-2100394*